# EUROPEAN PATENT SPECIFICATION

(11) **EP 4 634 609 B1**
(45) Date of publication and mention of the grant of the patent: **21.10.2026**
(21) Application number: 22838746.0
(22) Date of filing: 14.12.2022
(51) Int. Cl.: G01B 9/02097, G01B 9/02

(54) **TELECENTRIC INTERFEROMETER, METHOD FOR DETERMINING A CHARACTERISTIC OF AN INPUT LIGHT FIELD, AND INTERFEROMETER ASSEMBLY**
TELEZENTRISCHES INTERFEROMETER, VERFAHREN ZUR BESTIMMUNG EINER EIGENSCHAFT EINES EINGANGSLICHTFELDES UND INTERFEROMETERANORDNUNG
INTERFÉROMÈTRE TÉLÉCENTRIQUE, PROCÉDÉ DE DÉTERMINATION D'UNE CARACTÉRISTIQUE D'UN CHAMP LUMINEUX D'ENTRÉE, ET ENSEMBLE INTERFÉROMÈTRE

(43) Date of publication of application: 22.10.2025
(73) Proprietor: Berz, Martin, 81675 München (DE)
(72) Inventor: Berz, Martin, 81675 München (DE)
(74) Representative: Global IP Europe Patentanwaltskanzlei
(86) International application number: PCT/EP2022/085890
(87) International publication number: WO 2024/125784

(56) References cited:
- CN-A- 105 242 512
- US-A1- 2022 034 645
- US-B2- 10 823 547

## Description

### TECHNICAL FIELD

The present disclosure relates to a telecentric interferometer, a method for determining a characteristic of an input light field with a telecentric interferometer, and an interferometer assembly comprising a telecentric interferometer and an illumination device.

### BACKGROUND

Optical interferometers may be used to reconstruct the phase and/or amplitude of a light field. For example, this enables a three-dimensional image reconstruction. In particular, the spatial position (e.g. the position and/or the structure) of the object or individual points of the object or the local refractive index are to be determined from an intensity of a light field measured with a detector, which has interacted with an object. In addition, there is interest in the measurement of pure phase objects, i.e. objects invisible in conventional microscopy (sometimes also referred to as quantitative phase contrast microscopy).

In conventional optical systems, the problem may arise that the lateral alignment and/or resolution and/or axial resolution (i.e., depth of field) of the interferometer are limited, making image reconstruction difficult. Furthermore, conventional optical systems may suffer from chromatic and/or monochromatic aberrations (errors in imaging) that require costly and complicated corrections.

US patent application US 2017/242398 A1 discloses a birefringent lens in an inline interferometer for use in microscopy. The design is optimized for microscopy of incoherent sources. US patent publication US 2017/0329280 A1 discloses an apparatus including beam expanders for producing an interferogram generated by incoherent point sources. It implies the use of strongly refracting lenses in the interferometer with accompanying unsolved complex requirements from the inherent aberration, and the also unsolved necessary achromatic and chromatic balancing of the aberration corrections between the two interferometer arms.

US 9,417,610 B1 discloses an interferometer using concave mirrors to produce an interferogram significantly out of focus. That is why the overlap of spots is unimportant in this publication. The aim of the device is to image a phase aberration source in an upstream optical system in an interferometer via mirrors in such a way that the resulting phase aberration in the measured image can be compensated. This is applied to mutually incoherent sources. The arrangement of imaging elements in the interferometer (its design) is determined by the physical location of the phase perturbation layer in the middle of the path from the object to the front optics. The interferometer disclosed in this publication is not telecentric.

US 2022/034645 A1 discloses an self-referencing interferometer for determining an input phase and/or an input amplitude of an input light field and a corresponding method. US 10,823,547 B2 discloses a method for determining a phase of an input beam bundle with a self-referencing interferometer. CN 105 242 512 A discloses a telecentric optical structure-based transmission-type digital holographic microscopic imaging device.

In an interferometer, generally two central rays (i.e., along the axis of symmetry) are superimposed on the detector. Objects outside the symmetry (e.g., different from the central rays), however, may experience a reduced quality. In conventional arrangements, the quality of the interference usually varies across the field of view. This is of particular importance for coherent light sources, because for these light sources all field components can interfere with each other. The quality of the interference can be measured, among other things, by the quality of the overlap (in the case of images with one emitting point source).

In conventional interferometers, if the overlap of spots (e.g. a light field or a part of a light field being an image of a point like source) is inaccurate, then usually no interference is observable with mutually incoherent sources (e.g. spots), because the coherence is given only for the light within one and the same source. However, an interference of the spots can be achieved by defocusing i.e. blurring of the spots. This blurring uses the property that the superposition of inaccurately superimposed, i.e. laterally shifted, Gaussian spots still produces a Gaussian spot in the center position. The method benefits from an automatic suppression of non-aligned parts of the light field due to non-interference. However, this method may not be applicable for coherent light (e.g. for quantitative phase contrast), because inaccurate or approximate superposition would lead to new (but wrong) interferences with other spots. Furthermore, the real spots in optical systems are not Gaussian spots, but result from Fresnel diffraction at the exit pupil of the optical system (see, for example, "Born Principles of Optics", M. Born and E. Wolf, Cambridge University Press, 8th printing, 2013, Chapter 8.8). A non-centric superposition of these complex spots therefore may lead to non-rotationally symmetrical superpositions and considerable evaluation problems of the interferogram and thus to artifacts. Conventional methods sometimes also suffer from the resolution of the interferometer being greatest near the focus. Therefore, it is generally advantageous in an interferometer to superimpose the images of different spots near focus which implies 'as accurately as possible'. Therefore, devices with pinpoint overlap are needed, especially also for applications with (partially) coherent light.

Quantitative phase microscopy (i.e., self-interference with partially coherent light) is of high technological importance. Therefore, interferometers are sought that are suitable for both coherent light and light from mutually incoherent sources. Also, a combined evaluation for light of different coherence degrees may allow new sampling possibilities.

Conventional interferometer setups are usually based on principles which produce only an approximate overlap of the spots, i.e. do not allow to achieve the aforementioned accuracy for non-axial spots. This may already be recognizable by the use of different refractive powers in the optical systems in the two interferometer arms, without suitable compensation via lenses outside the interferometer. In this case, the telecentricity property cannot be fulfilled for both arms of the interferometer. In this case, telecentricity can only be achieved if a corresponding compensation is achieved by suitably optimized lenses outside the interferometer. If these optimized lenses are not provided outside the interferometer, then the overall system cannot be telecentric in the sense of this application. In particular, conventional systems may not have the necessary compensation to be telecentric in the sense of the application.

It may also be beneficial for an interferometer to be suitable for a wide spectral range, including wavelength multiplexing for achieving good visibility of interference fringes, synthetic wavelength applications or simply to use all available light for the measurement.

Moreover, conventional optical systems may not be telecentric, in particular not in the image-space (so-called image space telecentricity). There is therefore a need to provide an improved interferometer that is image space telecentric for both arms and which uses either no lenses/mirrors or only lenses/mirrors of very low refractive power in the arms of the interferometer of the device.

It is an object of the present invention to provide an improved telecentric interferometer and an improved method for determining a characteristic of an input light field with such a telecentric interferometer.

### SUMMARY

The object is solved by the telecentric interferometer according to claim 1 and the method according to claim 11. Further advantageous effects can be achieved by preferred embodiments defined in the appended dependent claims. The telecentric interferometer according to claim 1 comprises a frontside optics comprising an exit pupil, a first interferometer arm that is part of a first optical system and is located at an image side of the frontside optics, a second interferometer arm that is part of a second optical system and is located at the image side of the frontside optics, a detector that is located at an image side of both the first optical system and the second optical system, and a shifting unit located between the frontside optics and the detector. The first optical system and the second optical system have an identical object-side focal length and an identical Gauss image distance. The first optical system and the second optical system have an identically positioned object-side principal plane with an identical object-side optical axis. The exit pupil of the frontside optics is distanced to the object-side principal plane by the object-side focal length. The shifting unit shifts an image-side principal plane of the first optical system and/or an image-side principal plane of the second optical system such that the image-side principal plane of the first optical system is different from the image-side principal plane of the second optical system and an optical path length of the first interferometer arm is equal to an optical path length of the second interferometer arm.

The method for determining a characteristic of an input light field with a telecentric interferometer according to claim 11 comprises: propagating the input light field through the exit pupil of the frontside optics; dividing the input light field into a first portion and a second portion, wherein the first portion propagates along the first optical system and the second portion propagates along the second optical system; shifting the image-side principal plane of the first optical system relative to the image-side principal plane of the second optical system with the shifting unit such that the image-side principal plane of the first optical system is different from the image-side principal plane of the second optical system and an optical path length of the first interferometer arm is equal to an optical path length of the second interferometer arm; combining the first part of the input light field and the second part of the input light field into an output light field; and measuring an interference pattern of the output light field with the detector.

Those skilled in the art will recognize additional features and advantages upon reading the following detailed description, and upon viewing the accompanying drawings.

### BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale

The elements of the drawings are not necessarily to scale with respect to each other. The same reference numerals indicate corresponding similar parts. The features of the various illustrated examples can be combined unless they exclude each other. Examples are depicted in the drawings and detailed in the following description.
Fig. 1 schematically depict a telecentric interferometer according to aspects of the disclosure.
Fig. 2 schematically illustrates the principle of a telecentric optical system.
Figs. 3A and 3B schematically depicts aspects of a telecentric interferometer according to examples of the disclosure.
Fig. 4 schematically depicts an interferometer according to aspects of the disclosure.
Fig. 5A schematically depicts an interferometer according to aspects of the disclosure.
Fig. 5B schematically depicts an interferometer according to aspects of the disclosure.
Figs. 6A and 6B schematically depict aspects of a telecentric interferometer according to examples of the disclosure.

### DETAILED DESCRIPTION

The following detailed description refers to the accompanying drawings, which form part of the disclosure and in which specific examples of an interferometer and/or a method are shown for illustration purposes. The existence of further examples will be self-evident.

Throughout this description, wherever possible or useful and whenever not specified otherwise, the notation of "Field Guide to Geometrical Optics" by John E. Greivenkamp (SPIE, 2004) is used (in the following, abbreviated with "Greivenkamp").

In the following, positional relationships refer to the location within the optical path of the interferometer. For example, if a first component is positioned "downstream" ("upstream") of a second component, the first component is located behind (before) the second component in the optical path. If a first component is positioned "between" a second component and a third component, the first component may be positioned downstream the second component and upstream the third component or vice versa. In some examples, the location "downstream" ("upstream") refers to the image side (object side). "Lateral" refers to a direction perpendicular to the optical axis.

The optical axis can be taken as defined by optical elements and/or optical components, i.e. on a local basis. Every optical element with optical power has an optical axis given by the symmetry of the optical element. In a so-called 'aligned' optical system comprising several optical elements, the optical axes of the optical elements are aligned, i.e. coincide. A mirror has no optical power, and the system can have different optical axes before and after the mirror. The system is aligned if a ray before the mirror that is on the optical axis is also a ray on the optical axis after the mirror. Other optical elements without optical power can be treated analogously. In a so-called tunnel diagram all optical axes of an aligned system are drawn in one axis. The ray that runs along the optical axis is called central ray. When the system is aligned, the central ray passes through the entire optical system on the optical axis. The optical axis may also be referred to as symmetry axis or z-axis

Throughout this description, an optical component (sometimes also referred to as "optical element") may comprise at least one of or may be: a mirror, a concave mirror, a convex mirror, a beam splitter (e.g. a beam splitter cube), a lens, or a dielectric plate. Other optical components may also be possible.

Hereinafter, a geometrical path length of an optical path refers to the geometrical length of the optical path. In other words, the geometrical path length is the Euclidian distance integrated along a ray between a start point and an end point of the optical path. The geometrical path length between two optical components in the first interferometer arm or the second interferometer am does not include the length between the principal planes of said two optical components. i.e. only lengths that lie outside the area between the principal planes are counted. For this purpose, the central ray or the path length along the z-axis (symmetry axis) can be used and the principal planes are determined by means of Gaussian reduction for all individual optical components in the (first) optical system comprising the first interferometer arm and/or by means of Gaussian reduction for all individual optical components in the (second) optical system comprising the second interferometer arm, respectively. In contrast, the term "full geometrical path length" refers to the case where no subtraction of areas between the principal planes is done. Here and in the following, the geometrical path length and the full geometrical path length is always measured between the object and the detector, unless another reference point is explicitly specified. An optical path length is the full geometrical path length times the refractive index of an object positioned within the optical path. For a refractive index that varies along the optical path, the optical path length is given by a line integral over the refractive index.

If not specified otherwise in the following, the object-side characteristics (e.g. an object-side focal length) of an optical component (or optical system) may be identical to the image-side characteristics (e.g. an image-side focal length) of said optical component (or optical system).

If an optical component is referenced with only one principal plane, without further distinction, then the first and second principal planes are assumed to coincide. A generalization to a finite principal plane splitting is possible for the skilled optician.

A telecentric interferometer is provided. Telecentricity in object or image space requires that the chief ray be parallel to the axis in that space. As defined in Greivenkamp, the chief ray starts at the edge of an object (i.e. a point at the border of the field of view), goes through the center of a pupil (e.g., the entrance pupil), leaves at the center of a further pupil (e.g. the exit pupil) and defines the respective image height and location of (optional) other pupils. As a consequence of the image side telecentricity, the apparent system magnification is constant even if the detection plane is displaced from its focal position (i.e. is in defocus). The image will be blurred, but the center of each spot stays at the same lateral place, and the size or the magnification stays constant, even if each individual spot becomes blurred. The image-space telecentricity is independent from the location of the object or the detector. Therefore, images of the same size are produced regardless of the distance between the lens and the object or the detector. In this disclosure, for a general object in the field of view, the ray from the edge of the object passing through the center of the pupil can be called a chief ray.

In the case of an interferometer described herein, telecentricity (image side) may mean in particular that the optical system of the first interferometer arm (e.g., the Gauss reduction of the components of the first interferometer arm) may have the same focal length as the optical system of the second interferometer arm (e.g., the Gauss reduction of the components of the second interferometer arm). The two interferometer arms may also be referred to as "interferometric part" of the interferometer. The interferometer provided herein may be easy to implement and may allow for superposition of interfering images in an image-side telecentricity that is perfect in the paraxial Gaussian approximation. Furthermore, it may be possible that the position of the optical elements is chosen independently of the object or object related properties such as aberration so that a strict image-side telecentricity condition is satisfied.

In an image side telecentric system, different chief rays cross the exit pupil of the frontside optics at the pupil center and become rays parallel to the optical axis at the image side of the optical system or the detector. This can be the case for both the first interferometer arm and the second interferometer arm of the interferometer. An imaginary point source in the center of the exit pupil thus can generate a plane wave on the detector (in paraxial Gaussian approximation). That is to say, all these points can have the same phase difference for the chief ray in passing the two interferometer arms. Thus, an imaginary point source in the center of the exit pupil can produce a plane wave on the detector. That is, all object points can have the same phase difference for the corresponding chief ray as it passes through the two interferometer arms. The central ray can be the chief ray of an object on the axis. Different chief rays can have the same phase difference, which is equal to the phase difference of the central ray.

The telecentric interferometer, at least according to some aspects of the disclosure, may be suitable (e.g. without readjustment) for only a single wavelength (e.g., for one color) or for multiple wavelengths (e.g., the whole visible spectrum). For this purpose, it may be not sufficient to use focally achromatic optical elements, but the path difference between the arms of the interferometer has to be chromatically corrected depending on the setup (which is another type of being achromatic) and/or even the fringe space may be kept chromatically constant by an appropriate correction.

Throughout this disclosure, the term "image space telecentric system" may also refer to, or may even be used as a synonym, for an image space telecentric lens or an image space telecentric lens system that is part of the interferometer and provides the telecentricity characteristics. According to some examples, the telecentric interferometer comprises a first interferometer arm and a second interferometer arm. The first interferometer arm may be part of a first optical system and the second interferometer arm may be part of a second optical system. Each of the first optical system and the second optical system comprises optical components. In some examples, the first optical system and the second optical system may share at least one optical component, but may differ in at least another optical component. The shared optical component may not be part of the first interferometer arm or the second interferometer arm. That is to say, the first optical system and the second optical system may at least differ within the first interferometer arm and the second interferometer arm.

The first interferometer arm and the second interferometer arm may be provided by a beam splitter that splits an incoming light field into two light fields. Hereinafter, the terms "light field" and "light beam" may be used interchangeable (i.e., a "light field" is a "light beam" and vice versa), if not explicitly specified otherwise. A light field (or light beam) comprises a plurality of light rays. The first of the two light fields may propagate along the first interferometer arm while the second of the two light fields may propagate along the second interferometer arm. A light field (or spot) might have a chief ray, which can be defined as the ray which passes through the center of the exit pupil of the front end optics. After propagating along the separate interferometer arms, the two light fields may be combined again with a beam combiner. The initial beam splitter may be used as a beam combiner (e.g., in a Michelson-type configuration) or the beam combiner may be a separate optical component (e.g. in a Mach-Zehnder-type configuration).

For example, the beam splitter and/or the beam combiner may comprise or may be a beam splitter cube, a prism, a semi-transparent mirror, or a pellicle, or a dielectric component. Depending on the application, the chromatic effects are compensated or corrected to the necessary extent. The person skilled in the art will appreciate that any optical component suitable for splitting and/or combining a light field may be used as a beam splitter and/or beam combiner.

The beam splitter that defines the two interferometer arms may be part of an entrance optics of the interferometer. The beam combiner may be part of an exit optics of the interferometer. If the beam splitter is identical to the beam combiner, the beam splitter may be part of the entrance and the exit optics.

The first optical system and the second optical system may have an identical object-side focal length and an identical Gauss image distance. The term "object-side focal length" ("Gauss image distance") therefore denotes a first object-side focal length (first Gauss image distance) of the first optical system as well as a second object-side focal length (second Gauss image distance) of the second optical system, respectively. The Gauss image distance of an optical system is the distance between the principal plane and the conjugate plane (sometimes also called "object plane" for the object side and "image plane" on the image side). It may be possible that the first optical system and the second optical system also have an identical image-side focal length and an identical image-side Gauss image distance.

The first optical system and the second optical system may have an identically positioned object-side principal plane and an identical object-side optical axis. The "object side optical axis" may be the optical axis originating from the frontside optics. The identical focal length (also called "optical focal length" or "front focal length") of the first and the second optical system as well as the identical object-side principal plane may enable the overlap of the image-side telecentric beams. If the distance between exit pupil and principal plane was not identical, the chief ray of any object point passing centrally through the exit pupil at an angle above 0° would hit the principal plane of the first and the second optical system at different lateral distances from the axis. This would mean that the chief rays of the two interferometer arms might not have the same ray axis, so they would not lie on top of each other in the ray center. In such a scenario, which may be present in conventional interferometers, no interference signal or only a small interference signal would be measured, which could have a negative impact on the resolution of the interferometer.

In at least some examples, the image-side principal plane of the first optical system and the image-side principal plane of the second optical system are parallel. The image-side principal plane of the first optical system and the image-side principal plane of the second optical system may be different (e.g., located at different positions along the optical path of the central ray). The image-side conjugate plane of the first optical system may be different from an image-side conjugate plane of the second optical system. The image side focal length of the first optical system (sometimes also referred to as "rear focal length" of the first optical system) and the image side focal length of the second optical system (sometimes also referred to as "rear focal length" of the second optical system) may be equal. For example, the image-side conjugate plane of the first optical system is positioned at the location of the image of the object that originates from the path via the first interferometer arm. Likewise, the image-side conjugate plane of the second optical system is positioned at the location of the image of the object that originates from the path via the second interferometer arm.

The telecentric interferometer may comprise a detector. The detector is located at an image side of both the first optical system and the second optical system. For example, the detector may be or may comprise a CMOS sensor with a plurality of pixels. The detector can be set up so that, for a given object location, it is near the conjugate plane of the first optical system and the conjugate plane of the second optical system, which can be different from the conjugate plane of the first optical system. For example, the detector may be located between the image-side conjugate plane of the first optical system and the image-side conjugate plane of the second optical system. In such a scenario, neither the image from the first interferometer arm nor the image from the second interferometer arm is in-focus on the detector, but both images are slightly off-focus.

In some examples, an image-side optical axis of the first optical system is identical to an image-side optical axis of the second optical system. In addition or as an alternative, the system may be aligned. In this case, the interferometer may be a fully centered optical system. Alternatively, the image-side optical axis of the first optical system may be laterally shifted with respect to the image-side optical axis of the second optical system. Such a lateral shift may also be called "lateral shear". The lateral shear may be chosen such that neighboring spots still overlap at least partially. It can be useful for coherent light sources, where even different spots can interfere with each other. Hereinafter, a spot may be a light field or a part of a light field that is an image of a point-like source. The lateral shear can be achieved, for example, by slightly rotating a physical optical component located in one of the pupils of the system. In embodiments of the present disclosure, this shear may be set to zero by adjustment, or set to a finite value.

In at least some examples, the telecentric interferometer comprises a frontside optics (sometimes also called "frontend optics"). The first optical system and the second optical system may be located at an image side of the frontside optics. In use of the interferometer, the object that is to be investigated with the interferometer may be placed on an object side of the frontside optics. The frontside optics comprises an exit pupil. This exit pupil can be mapped to infinity by the first optical system and/or the second optical system. It may be possible that both the first optical system and the second optical system satisfy the image-side telecentric condition, although the image-side principal planes of the two optical systems may be different.

The exit pupil of the frontside optics may be distanced to the object-side principal plane of the first optical system and the second optical system by the object-side focal length. This location of the exit pupil allows for providing a telecentric system (e.g., an image-space telecentric system), for example for both arms of the interferometer. An image-space telecentric interferometer provides telecentric properties at least on the image side of the optical system.

The telecentric interferometer may comprise a shifting unit. The shifting unit is located between the frontside optics and the detector. For example, at least a component of the shifting unit may be located in the first interferometer arm and/or the second interferometer arm. In some examples, both the first optical system and the second optical system comprise a part of the shifting unit; for instance, both the first interferometer arm and the second interferometer arm may comprise a part of the shifting unit. Alternatively, the shifting unit may solely be located within the first interferometer arm or the second interferometer arm.

The shifting unit shifts an image-side principal plane of the first optical system and/or an image-side principal plane of the second optical system. In some examples, the shifting unit shifts an image-side principal plane of the first interferometer arm and/or an image-side principal plane of the second interferometer arm. The shifting unit can be adapted such that the shifting results in the image-side principal plane of the first optical system being different from the image-side principal plane of the second optical system and an optical path length of the first interferometer arm being equal to an optical path length of the second interferometer arm. The optical path for the first interferometer arm and the second interferometer arm can be respectively determined for a central ray along the symmetry axis of the system. In particular, the optical path can be determined between the corresponding start point of the ray on the object point and the corresponding end point of the ray on the detector. Since the detector cannot be in the same image plane for both arms (since they are different), the mapping from the object to the detector is not stigmatic and rays different from the central ray may have a phase difference. This may be responsible for the appearance of the interference pattern.

The object-side principal plane of the first optical system is identical (e.g. identically positioned) to the object-side principal plane of the second optical system. The principal planes on the image side of the first system and the second system, however, may be different. The adjustment of the optical path equality can be achieved e.g. by shifting a mirror in one of the arms of the interferometer. In this case the mirror can be part of the shifting unit.

In some examples, the first interferometer arm and/or the second interferometer arm may have a finite focal length, as far as the respective systems in the arms are built of optical elements with finite focal length. In other words: a part of the first optical system and/or the second optical system that lies within the first interferometer arm and/or the second interferometer arm, respectively, has a finite focal length (using Gaussian reduction). In contrast, if the part of the first optical system within the first interferometer arm and/or the part of the second optical system within the second interferometer arm comprises only dielectric plates, the first interferometer arm and/or the second interferometer arm, respectively, has an infinite focal length. As far as the interferometer arm contains one or more optical elements with an absolute refractive power above zero, the magnitude of the absolute focal length of the respective optical element divided by the beam diameter (or diameter of the exit pupil of the frontside optics) is greater than 10, or 20, or 30, or 50, or even greater than 100. It may be possible that the first interferometer arm and/or the second interferometer arm only contains elements with negative refractive power, i.e. a concave lens or a convex mirror, and flat mirrors respectively.

The position of the pupils, the principal planes and the optical elements may be given by the interferometer setup, but the position of the image planes may depend on the position of the object. The position of the detector (which may not be counted among the optical elements) is suitably chosen taking into account the object. Focusing in the usual sense is not necessary. The object can be a grouping of inhomogeneities, disturbances or scattering centers (in the following also called "disturbances"). A disturbance is an object that disturbs or scatters the straight-line propagation of light. In optical theory, all such objects can be considered as sources of spherical waves (or comparable electromagnetic modes), which in turn can be imaged by the optical system. The light field of the disturbance can also be called 'spot'. Imaging distances refer to these disturbances and the corresponding images.

The shifting by the shifting unit may correspond to a defocusing of the first interferometer arm (and/or the first optical system) relative to the second interferometer arm (and/or the second optical system). Here, the focal length and the distance of the respective conjugate planes from the respective principal planes may be identical for the first interferometer arm and the second interferometer arm. "Defocusing" in this context refers to the situation that the detection plane and the image plane (conjugate plane) do not coincide. In contrast, in an optical system without a defocus, the detection plane and the image plane usually do coincide. Since the shifting (or defocusing) is performed differently for the first interferometer arm and the second interferometer arm, the terminology "defocusing the first interferometer arm relative to the second interferometer arm" (or vice versa) is used. When describing the optical system by the Gaussian equations, this may mean that the specified distances to the principal planes are identical for the first interferometer arm and the second interferometer arm. This may be the case for object and image as well as for the pupils of the system, respectively for the first and the second interferometer arm. These two design criteria (concerning image and pupil location) may be fulfilled simultaneously.

The shifting may change an axial position of a first light field (e.g., a first part of an input light field) propagating through the first optical system relative to a second light field (e.g., a second part of an input light field) propagating through the second optical system. The lateral position of the first light field relative to the second light field usually is not changed by the shifting. However, if the first light field and the second light field experience a relative lateral shift (so-called "lateral shear") by the shifting unit (or by another optical component of the interferometer), such a lateral shift may be compensated, for example by a slight tilt of at least one of the mirrors of the first interferometer arm and/or the second interferometer arm and/or of the interferometer, for example for a physical component located in one of the pupils.

The first light field may be superimposed with the second light field after propagating through the first interferometer arm and the second interferometer arm, respectively. A first spot of the first light field and a second spot of the second light field may interfere to a common output spot of an output light field. The first spot of the first light field and the second spot of the second light field may originate from an identical input spot of the input light field. The input light field therefore may be overlapped with its defocused self, thereby generating interference patterns that may allow for determining a characteristic (e.g., a phase or an amplitude) of the input light field. Due to the design of the defocusing, the two light fields coming into interference may have the same beam opening angle and/or the same divergence angle of the same curvature. For a light field or spot, the divergence angle can be measured at the beam waist, i.e. at the location with minimum beam radius, and represents the angle of incidence and divergence of the light field at this point (beam divergence angle).

The effects of defocusing in an interferometer (in particular a reference-beam free interferometer) are explained in detail in US patent application publication US 2022/034645 A1. This document also explains the extraction of a characteristic of an input light field with an interferometer comprising a defocusing unit. The disclosure of said US patent application publication with respect to the evaluation and the overall concept of the interferometer is hereby incorporated by reference. The present disclosure makes use of the concept of defocusing (shifting) similar as in the US patent application publication US 2022/034645 A1, but in combination with a novel telecentric design.

In addition to imaging errors, in some aspects of the disclosure, it may be beneficial to compensate for chromatic changes in path length. It may therefore be disadvantageous to use lenses of large refractive power in interferometer arms, because the associated errors may not be avoided. In the case of lenses of large refractive powers being present in the interferometer arms, image components outside the center of the optical system may not brought to interference as desired. Conventional interferometers that comprise lenses of large refractive powers may be used only for incoherent light sources.

Using an interferometer with chromatic compensation may allow for also using the interferometer for coherent light fields (obtaining a quantitative phase contrast). Interferometer errors have a particularly strong effect for coherent light because the electric field is included quadratically in the measured correlation term from the two interferometer arms. In this case the evaluation can done according to the methods of patent publication US 10,823,547 B2.

According to some examples, the shifting unit comprises at least one weak lens located in one of the first interferometer arm or the second interferometer arm. For example, the shifting unit comprises a first weak lens (e.g., a convex weak lens) located in the first interferometer arm and/or a second weak lens (e.g., a concave weak lens) located in the second interferometer arm. The first weak lens may be different from the second weak lens. The shifting unit may further comprise a strong lens located at an image side of the first weak lens and/or the second weak lens. Each of the lenses may be a regular lens or a mirror lens, for example. It may be possible that the strong lens compensates for the different refraction effects of the first weak lens and the second weak lens in such a way that, as a result, both optical systems image the exit pupil of the front-end optics telecentrically.

The weak lens (e.g. the first weak lens and/or the second weak lens) may have a finite focal length. The absolute focal length (i.e., its absolute value) of the weak lens may be above zero and below infinity. The strong lens may also have a finite focal length. The absolute value of the focal length of the strong lens may be above zero and below infinity. The weak lens (e.g., the first weak lens and/or the second weak lens) may have a focal length (absolute value) of at least 100 mm, or 200 mm, or 300 mm, or 400 mm, or 500 mm, or 1000 mm, or even 1500 mm. Separately or in combination, the absolute value of the focal length of the weak lens (e.g. the first weak lens and/or the second weak lens) divided by the beam diameter may be at least 10, or 20, or 30, or 50, or 100, or 150. In general, the weak lens and/or the strong lens (e.g., in the shape of a regular lens or a mirror) can be convex only or concave only, or concave in one arm and convex in the other.

In some examples, the weak lens (e.g., the first weak lens and/or the second weak lens) may be distanced from the strong lens by the focal length of the strong lens. It may be possible that both a first weak lens as a part of the first optical system and a second weak lens as a part of the second optical system may be distanced from the strong lens by the focal length of the strong lens. The weak lens may have no influence on the focal length of this double system (i.e., the combination of weak lens and strong lens). The weak lens, however, may have an influence on the axial position of the image-side principal plane of said double system. The weak lens may thus be capable of shifting the image-side principal plane in a different manner for the first optical system and the second optical system.

The strong lens may be located outside the first interferometer arm and the second interferometer arm, for example downstream the first interferometer arm and the second interferometer arm. For example, the strong lens may be part of the first optical system and the second optical system. That is to say, the strong lens may not be part of any of the interferometer arms, but of both optical systems. The strong lens may therefore be a common strong lens of the first and second optical system. The strong lens may be part of an exit optics. The exit optics may be located between the interferometer arms on the one hand and the detector on the other hand.

The first weak lens and/or the second weak lens may be distanced to a principal plane of the strong lens by an object-side focal length of the strong lens. The first weak lens and/or the second weak lens may have a larger absolute object-side focal length than the strong lens. For example, the object-side absolute focal length of the first weak lens and/or the second weak lens may be at least one order of magnitude larger than the object-side focal length of the strong lens. In other cases, the absolute focal length of the weak lens may be larger than 2, or 3, or 5, or 10 times of the absolute focal length of the strong lens. The optical power of the weak lens may be correspondingly weak compared to the strong lens.

In some examples, the shifting unit comprises the first weak lens in the first interferometer arm and the second weak lens in the second interferometer arm. A focal length (e.g. an object-side focal length) of the first weak lens and a focal length (e.g. an object-side focal length) of the second weak lens may be equal in magnitude but opposite in sign. For example, the first weak lens is a converging lens and the second weak lens is a diffusing lens or vice versa. Separately or in combination, the first weak lens may be a concave lens or a convex mirror or the second weak lens may be a concave lens or a convex mirror. The object-side focal length of the strong lens may be smaller in magnitude than the focal length of the first weak lens and the focal length of the second weak lens.

It may be possible that the first weak lens and/or the second weak lens and/or the strong lens comprise(s) a plurality of optical elements that result in the properties of the focal length described above. Using a combination of lenses as a first weak lens and/or a second weak lens and/or a strong lens instead of only a single lens may allow for adapting the optical properties of the lens system. For example, geometrical and/or chromatic aberrations may be suppressed by using a combination of lenses.

The weak lenses have a weak optical power and therefore have only small monochromatic aberration effects. Monochromatic optical aberrations may be mainly relevant in the described systems if they disturb the image-side telecentricity and if they are different for the first interferometer arm and the second interferometer arm.

In at least some examples, the telecentric interferometer is configured in a Michelson-type configuration. In such a configuration, the beam splitter that defines the two interferometer arms may also be used as a beam combiner. Each interferometer arm may be passed twice by the light field travelling inside the interferometer arm.

In some examples, the interferometer is configured in a Michelson-type configuration and the shifting unit comprises the first weak lens and the second weak lens. Further, the shifting unit comprises the strong lens. The first weak lens may be a concave mirror or a flat mirror and the second weak lens may be a convex mirror or vice versa. The focal lengths of the first weak lens and the second weak lens may therefore be opposite in sign. The absolute value of focal lengths of the first weak lens and the second weak lens may be identical in magnitude.

In some examples, the shifting unit of the telecentric interferometer comprises a dielectric plate. The dielectric plate may be located in the first interferometer arm or the second interferometer arm or in both, where the dielectric plates can be different. It may be possible that the shifting unit comprises a further dielectric plate located in the other interferometer arm. For example, the dielectric plate is located in the first interferometer arm and the further dielectric plate is located in the second interferometer arm or vice versa. The dielectric plate may be free of any converging or diffusing properties and/or may (if considered as an optical system) have a focal length that approaches infinity. In other words: the dielectric plate may not be a lens. An entry face of the dielectric plate may run essentially parallel to an exit face of the dielectric plate.

The refractive index and/or the thickness of the dielectric plate may be chosen such that the optical path length of the first interferometer arm is equal to the optical path length of the second interferometer arm and the geometrical path length of the first interferometer arm differs from the geometrical path length of the second interferometer arm. The optical path length may be measured from the object to detector. The detector may not be located in one of the image planes (conjugate planes) of the first optical system and the second optical system. As a matter of fact, the geometrical path length from the object to the respective conjugate planes of the first interferometer arm and the second interferometer arm are the same. The thickness of the dielectric plate is its extension between its entry face and its exit face. The refractive index of the dielectric plate may be changed, for instance, by changing the material of the dielectric plate.

The dielectric plate may consist of a single dielectric material or may comprise several dielectric plates and/or dielectric layers, wherein at least two of the several dielectric plates consist of different dielectric materials. The several dielectric plates and/or dielectric layers may be stacked together and/or there may be a space between at least two of the dielectric plates and/or dielectric layers.

For example, the dielectric plate may be positioned in the first interferometer arm. The geometrical path length of the first interferometer arm is chosen such that it is different from the geometrical path length of the second interferometer arm without any dielectric plate. For example, in a Michelson-type configuration, the mirror in the first interferometer arm may be positioned slightly offset (e.g., in axial direction or z-direction) compared to the mirror in the second interferometer arm. Without any dielectric plate, the optical path lengths of the two interferometer arms would also differ in such a configuration. The dielectric plate (e.g., the material and/or thickness of the dielectric plate) is chosen such that it compensates this difference in optical path lengths between the two interferometer arms that arises when no dielectric plate is inserted in the first interferometer arm. The dielectric material (or, in case of several dielectric plates and/or layers, the dielectric materials) may be chosen such that this compensation may be achieved for several different wavelengths. The geometrical path length, however, is left unchanged by the dielectric plate, except for a principal plane splitting which should be considered when determining the geometrical path. Both effects, the principal plane splitting and the change of the optical path length lead in this way to the desired shifting effect: The same optical path length with a different geometrical path length for the first and second interferometer arms.

The geometrical path length of the first interferometer arm differs from the geometrical path length of the second interferometer arm by the optical path length that has been compensated by the dielectric plate. This is, mutatis mutandis, also true if the dielectric plate is positioned in the second interferometer arm or if both interferometer arms comprise a dielectric plate. In the latter case, the dielectric plates of the two interferometer arms differ in refractive index, dispersion and/or thickness.

According to some examples, an alignment of the interferometer may comprise an alignment step (e.g., a final alignment step) that comprises adjusting the axial mirror position in at least one of the interferometer arms so that there is no longer any optical path length difference between the first interferometer arm and the second interferometer arm. This alignment step might be also be used in combination with other examples described in this description (e.g., for a shifting unit that comprises a lens). For example, in the case of a shifting unit comprising a dielectric plate, the alignment can be achieved for multiple wavelengths despite dispersion in the dielectric material(s). The alignment step of adjusting the optical path length by adjusting the position of the mirrors may not be available in a so-called common path setup.

According to at least one example, the telecentric interferometer further comprises an entrance optics. The entrance optics is located between the frontside optics on the one hand and the first interferometer arm and the second interferometer arm on the other hand. The entrance optics may be part of both the first optical system and the second optical system. The entrance optics is adapted for adjusting the object-side focal length of the first optical system and the object-side focal length of the second optical system. The entrance optics may be used to adjust the first optical system and the second optical system to the exit pupil of the frontside optics. In some examples, the entrance optics comprises at least one of: a relay lens, a tube lens, or an achromatic tube lens. The entrance optics may comprise a beam splitter that defines the two interferometer arms.

The interferometer (e.g., the two interferometer arms, including the beam splitter and/or the beam combiner) may comprise several optical components. At least one of the optical components (e.g., a mirror) may be positioned in the first optical system at a different spatial position than the optical components of the second optical system. This makes it possible to adjust the optical path length by shifting one of the optical components spatially. By moving, e.g., a mirror, it is possible to bring the optical path length difference between the two interferometer arms to zero. In this example, the interferometer avoids a common path setup, where the two paths of the beam splitter are realized by a polarization filter. It is conceivable that a double refractive material may be used to achieve this path adjustment, e.g. a liquid-crystal-based device. This might allow the path length difference between the two polarizations to be set, but the compensation by the dielectric layers of the device is subject to dispersion. To compensate this dispersion is very complicated and costly. This device is therefore only be suitable for narrow wavelength ranges. Therefore, the use of a common path interferometer may be excluded.

In some examples, the telecentric interferometer may comprise an exit optics located between the first interferometer arm and the second interferometer arm on the one hand and the detector on the other hand. The exit optics may be part of both the first optical system and the second optical system. For example, the exit optics may comprise a beam combiner that combines the light fields that propagated through the interferometer arms. In some examples, the exit optics may comprise a strong lens that is part of the shifting unit. The exit optics may be configured for adjusting the magnification, the image-side focal length and/or the position of the principal planes of the first optical system and the second optical system to allow for a sufficient focus onto the detector.

Light rays have a linear phase in the direction of their propagation, e.g. the z-direction. Near the beam waist there is an additional phase effect, the so-called Gouy phase. The variation of the Gouy phase near the focus extends in the z-direction over some Rayleigh lengths. The Rayleigh length is defined for light fields in such a way that at a distance of one Rayleigh length from the beam waist the area of the light field has doubled (image blur). In the image-side telecentric interferometer disclosed herein, the interference may be measured in such a way that both the field over the first interferometer arm and the second interferometer arm may be measured near their respective focus. For this purpose, the interference can be measured for a detector position between the two image planes (principal planes) of the first and second interferometer arm, respectively. For a detector position exactly in the center position, the two Gouy phases of the two fields may be exactly opposite, i.e. may contribute twice to the interference. The linear phase, however, may not contribute to the interference, except for a global phase (provided that the propagation direction is normal to the detection plane). This can be the case for an image telecentric setup.

According to some aspects of the disclosure, a spacing of the principal planes of the two interferometer arms divided by the Rayleigh distance may be less than 2, or 5, or 10, or 20, or 30, or 50, or 100. The Rayleigh length or the Rayleigh distance refers to the light field leaving the exit optics and may be determined for this purpose for a point source and it may be determined for the light field incident on the detector.

The image-side telecentric interferometer according to this disclosure may have overlapping chief rays parallel to the optical axis in the image space for the two interferometer arms for each object point (spot). Thus, the chief rays may also hit the detector at the same point for the two interferometer arms. The quality of compliance with this requirement can be measured with the (lateral) alignment error and/or the Gouy error.

The (lateral) alignment error may be the lateral distance of the chief rays of the first interferometer arm and the second interferometer arm at the point of intersection of the detection plane (assumed symmetrical between the two conjugate planes, determined for the typical object distance of the application), divided by the minimum diffraction-induced spot size of the spot image on one of the principal planes (i.e. in focus). The lateral alignment error is typically determined at the edge of the field of view. In some examples, an interferometer according to the disclosure may have an alignment error below 0.2, or below 0.5 or below 1 or below 2, or below 5, or below 10, or below 15, or below 20, or below 30, or below 50.

The Gouy error may be determined as follows. The chief rays for each of the first interferometer arm and the second interferometer arm for a spot may enclose a respective angle above zero with the system axis (=symmetry axis). The larger angle for the two interferometer arms is used to determine the path extension of the oblique path between the image (conjugate) planes of the first interferometer arm and the second interferometer arm according to the geometric rules. This lengthening causes a shift of the Gouy phase between the principal planes and can be avoided by a good telecentricity, 'good' here may mean that the chief ray hits the detector exactly at an angle of 90°. The path lengthening divided by the Rayleigh length is called the 'Gouy error'. The Gouy error is determined at the edge of the field of view. In some examples, the interferometer according to the disclosure may have a Gouy error of below 0.1 or below 5e-2, or below 1e-2, or below 5e-3, or below 1e-3 or even below 1e-4.

According to some examples, at least one of the first optical system or the second optical system comprises a correction unit. For example, both the first optical system and the second optical system may comprise a correction unit. The correction unit is adapted for correcting a chromatic change in the optical path length in the first optical system and/or the second optical system caused by the shifting unit. This chromatic change may particularly be caused by the shift of the optical path length.

In contrast, an achromatic lens is corrected to provide the sharpest possible image for a wide range of wavelengths. In particular, it may be beneficial if the focal length does not depend on the wavelength. A sharp image means the lowest possible wavefront error. This concerns differences in the path length, related to the reference wavefront. The path length itself, e.g. for the chief ray, is not kept constant for a common achromatic lens. In particular, this is the case when both the first optical system and the second optical system contain different achromatic lenses. For this case, the difference in path length of a central ray of the first optical system and a central ray of the second optical system may depend on the wavelength due to unavoidable dispersion in the dielectric media of the lenses. Achromatic lenses therefore may benefit from a correction unit for the path of the central ray in addition to the achromatic property. Thus, it may be hard to bring the difference in path length to zero for all wavelengths even by adjusting the path length by moving an optical element in one of the interferometer arms (e.g. by changing the position of the mirror). As a result, different wavelengths have a different relative phase position to each other e.g. for the central ray (which may correspond to the center of the telecentric interference spot). The visibility of the interference is significantly reduced until the interference is invisible. If this is the case in a setup, a correction unit is recommended.

Aberration compensation (sometimes also called chromatic compensation) in lenses and the correction unit introduced herein typically concern different aspects. For example, an aberration corrected lens (e.g., an achromatic doublet) may cause wavelength dependent path length differences between the two interferometer arms, which may be corrected by the correction unit. The correction unit, however, may be adapted for correcting such aberration effects in the difference between the path length of the first interferometer arm and the path length of the second interferometer arm (as measured for instance for the central ray of the first interferometer arm and the central ray of the second interferometer arm). Such aberration effects may be caused by the shifting unit and/or by a further optical component of the first optical system and/or the second optical system.

A focal length of the correction unit may approach infinity. In other words: the correction unit may be free of diverging or converging properties. The correction unit may have a translational invariance in a direction perpendicular to the optical axis. In other words: the correction unit may be free of any diverging or converging properties. The correction unit may also laterally correct a light field propagating through the first optical system and/or the second optical system such that a light field that travels along the optical axis before propagating through the first optical system and/or the second optical system also travels along the optical axis after propagating through the first optical system and/or the second optical system.

In some examples, the correction unit may comprise or may consist of at least one dielectric plate (e.g., dielectric planar plate). The at least one dielectric plate may be located in one of the first interferometer arm or the second interferometer arm or each of the first and the second interferometer arm may comprise at least one dielectric plate, wherein the optical flats of the dielectric plates in the interferometer arms are different (e.g. with respect to at least one of: their material, their refractive index, their dispersion, their thickness.) between the first interferometer arm the second interferometer arm. Using at least one dielectric plate as a correction unit may allow for correcting chromatic path length effects.

In some examples, the correction unit may comprise or may consist of at least one optical flat that is slightly tilted with respect to the optical axis. The at least one optical flat may be located in one of the first interferometer arm or the second interferometer arm or each of the first and the second interferometer arm may comprise at least one optical flat. Alternatively or in combination, the correction unit may comprise or may consist of a first prism and a second prism oriented inversely to each other, so that there is only a small air gap between the inclined surfaces. The respective second surface in the beam path of the first prism and the second prism are parallel to each other. The whole system may act like a dielectric plate whose thickness can be changed by laterally moving the prisms towards each other.

If the interferometer comprises a strong lens and a weak lens as described above, it may be possible to realize a telecentric setup where only the weak lens is positioned in one of the two interferometer arms (or a respective weak lens is positioned in either one of the two interferometer arms). For example, if the weak lens is a concave or a convex mirror, respectively, there are no chromatic effects in the interferometer that change the optical path difference between the first interferometer arm and the second interferometer arm. In this case, chromatic correction may be dispensed with and the interferometer may be free of a chromatic correction unit.

In some examples, the interferometer comprises a chromatic correction unit. The correction unit may be adapted to keep the optical path length difference between the first interferometer arm and the second interferometer arm constant over a chromatic range. For example, the chromatic correction unit may be part of the correction unit or may be different from the correction unit. The interferometer may be chromatically corrected for the measurement of light with a spatial coherence length of the following multiples of the wavelength of said light: 1, 2, 5, 10, 25, 50, 100, 500, or 1000.

The inventor of the present application has found that by combining a shifting unit and a correction unit, the telecentric interferometer may be designed in a simplified manner compared to other systems. Depending on the requirements for the application waveband, the spectral width of the necessary chromatic correction is determined. For a simple setup (LED light or superluminescent LED light as an illumination device for the interferometer, or measuring photoluminescence) dielectric flats are suitable, for a wider range a per se achromatic design with curved mirrors is possible. In this case, a chromatic correction unit might be omitted. Highest requirements are achieved with chromatic spot correction (chromatic balanced shifting unit). All approaches lead to a system with image-side telecentricity for the two interferometer arms and path equality for the central ray.

The measured interference pattern of the interferometer can comprise interference patterns, interference rings and/or interference fringes. These structures are in different phase position at different wavelengths, whereas the central ray (parallel to the axis of symmetry or z-axis) has the same phase position (zero interference) according to the described and performed chromatic correction of the path length (correction unit). A different chromatic phase position for other than the chief ray is called "spot chromaticity". Based on a constant phase position of the central ray in the image, the "2π" phase passes of the interference can be counted, and this number determines the preferred temporal coherence length of the light. For example, if the maximum phase difference in the phase-interleaved phase image is 4π, then at least a temporal coherence of two wavelengths may be required in the measured light. The placement of principal planes (and thus the conjugate planes) may result in a phase shift of rays which are not central rays. Away from the zero-order interference, the position of the fringes can be wave-dependent (called in this disclosure "spot chromaticity"). It is possible to shift the principal planes (and hence the conjugate planes) wavelength-dependent (f.i. by using a chromatic weak lens) such that the central rays have unchanged zero interference, but the fringes are shifted with wavelength by variable principal planes in the direction opposite to spot chromaticity so that the overall interference pattern becomes stationary. This allows to correct not only the chromaticity in the path length but also the spot chromaticity and thus to measure e.g. also white light with a coherence length of one wavelength without filter. A shifting unit with this property is called a chromatic balanced shifting unit. It may be desired to correct a chromatic weak lens by a chromatic correction unit.

In some examples, the correction unit comprises at least two dielectric elements with mutually different refractive indices. Separately or in combination, the shifting unit comprises a dielectric plate that is also part of the correction unit.

In some examples, the shifting unit may comprise at least one optical component with optical power (e.g., refractive power). The optical component with optical power may be a curved mirror and/or a lens. (e.g., a weak lens and/or a strong lens). Hereinafter, the term "lens" refers to both a refractive lens and a curved mirror. The Gaussian reduction of all optical elements within the first interferometer arm and/or the Gaussian reduction of all optical elements within the second interferometer arm, including the correction unit (which typically has zero optical power) and the lenses (with optical power) in the first interferometer arm and the second interferometer arm, may in this case have a finite focal length (i.e., an optical power different from zero).

In alternative examples of an interferometer, the first interferometer arm and/or the second interferometer arm may be free of a beam expander, e.g. such as, for example, a strong dielectric lens, a strong concave mirror, a strong convex mirror, or a combination of these optical components. A beam expander is an afocal system (Keplerian or Galilean telescope). A strong optical component is an optical component with an F-number (absolute value) smaller than 50, or 30, or 20, or 10, or 5 or 2. For example, the part of the shifting unit within the first interferometer arm and/or the second interferometer arm may be free of such a beam expander. In particular, the shifting unit may be different from the beam expander or from the beam expanders. For instance, if the shifting unit comprises a weak lens and a strong lens, the weak lens may be positioned within one of the interferometer arms and may be different from a true afocal system (which excludes here afocal systems such as mirrors or dielectric plates) and the strong dielectric lens may be positioned outside of the interferometer arms. Afocal systems in this context are telescopes such as Keplarian or Galilean Telescopes. Weak lenses may be in the interferometric part (i.e., the first and/or second interferometer arm) of the system, strong lenses may be outside the interferometric part. For examples, without countermeasures, a strong dielectric lens used as a beam expander (an afocal system) may lead to relevant monochromatic and chromatic aberrations that might have to be corrected (if the lens was in the interferometer part). In addition, a chromatic correction (concerning optical path length) might have to be made. Such corrections are typically complicated and costly due to the large number of optical components involved. For these and other reasons, such a setup with a beam expander in the interferometric part has several disadvantages compared to the compact setups according to aspects of the disclosure. For the same reasons, the interferometer arms may not comprise strong optical lenses or compound lens systems in general. The interferometer may, however, comprise such lenses outside of the interferometer arms. A lens is considered strong in this context if its focal length is shorter than 8 times, 6 times, 4 times, 2 times, 1.5 times, 1.0 times, or 0.5 times or 0.2 times of the largest linear dimension of the system. The system dimension for this purpose is the full geometric length of the beam path in the interferometer. In this context, the first and second interferometer arms start in the beam path at the first point where the beam for the first interferometer arm and the second interferometer arm experiences different locations or different optical transformations (e.g. by a lens). The interferometer arms end where the beam paths of the two beams of the first interferometer arm and the second interferometer arm are superimposed for interference.

In some examples, the telecentric interferometer comprises a phase shifting unit arranged in or downstream of at least one of the first interferometer arm or the second interferometer arm. For example, the phase shifting unit may be arranged in the first interferometer arm and/or the second interferometer arm. Separately or in combination, the phase shifting unit may be arranged between a beam combiner that combines the two interferometer arms and the detector. The phase shifting unit may comprise at least one of: a movable mirror (e.g., in the first interferometer arm and/or the second interferometer arm), e.g. by a piezoelectric crystal, a circular polarizer, a linear polarizer, a quarter-wave plate (e.g., an achromatic quarter-wave plate), or a polarization-sensitive detector. With the phase shift unit, images with different relative phase shifts can be acquired and the interference term in both phase positions (e.g. real and imaginary) can be determined from them. The phase shifting unit may thus modulate the zero optical path difference between the two interferometer arms by an angular value smaller than 180° (or smaller than 360°) or smaller than half the wavelength (or the entire wavelength. The goal may be to determine from the different images a complex interference term (also referred to as "complex interferogram"). The complex interference term IF(x,y) may be given by: IF(x,y) = conjugate(E2(x,y)) * E1(x,y) from the different images. IF(x,y) is a complex quantity determined by evaluation from intensity images. E1(x,y) and E2(x,y) denote the electric field originating from the first and second interferometer arm, respectively, in complex notation for the point (x,y) on the detector. IF(x,y) is the interference quantity determined via an evaluation unit. IF(x,y) contains the phase information of the light field measured in self-interference. A device according to the disclosure can therefore be equipped with a phase shifting unit and an evaluation unit for determining the complex interferogram IF.

According to some aspects, the phase shifting (with the phase shifting unit) may differ from the shifting of the principal planes (with the shifting unit). Phase shifting may by performed to determine the complex interference term from detected intensities. Principal plane shifting may be performed to obtain sufficiently distinct electric fields E1 and E2 in the different interferometer arms.

Further aspects of the present disclosure are directed to a method for determining a characteristic of an input light field with a telecentric interferometer according to examples described herein. The characteristic of the input light field may be or may comprise at least one of: a phase of the input light field or an amplitude of the input light field. The input light field may originate from an object. For example, the input light field is a coherent field or a partially incoherent field or an entirely incoherent field. The input light field may comprise several light rays. The input light field may be monochromatic or polychromatic. A central light ray of the input light field may define the optical axis of the interferometer.

According to some examples, the method comprises propagating the input light field through the exit pupil of the frontside optics and dividing the input light field into a first part (e.g., a first light field, which may be denoted as E1) and a second part (e.g., a second light field, which may be denoted as E2), wherein the first part propagates along the first optical system (e.g., along the first interferometer arm) and the second part propagates along the second optical system (e.g., along the second interferometer arm). A central light ray of the first (second) portion may define the optical axis of the first (second) interferometer arm.

The method may further comprise shifting the image-side principal plane of the first optical system relative to the image-side principal plane of the second optical system with the shifting unit such that the image-side principal plane of the first optical system is different from the image-side principal plane of the second optical system and an optical path length of the first interferometer arm is equal to an optical path length of the second interferometer arm. The optical path length is measured between the object and the detector. The first part, as measured on the detector, thereby is defocused relative to the second part, as measured on the detector.

In some examples, the first part and the second part are combined into an output light field. An interference pattern (e.g. a complex interference pattern) of the output light field may be measured with the detector. The interference pattern may originate from an interference of the first part of the input light field with the second part of the input light field that is shifted relative to the first part. The input light field may thus be interfered with its shifted (e.g. defocused) self. The telecentric interferometer therefore may be a reference-beam free interferometer.

Due to the shifting of the principal planes, the first light field and the second light field may have different propagation lengths when interfering on the detector, but the optical path length for the central ray of the two light fields is the same. The central ray therefore may show a zero difference in the optical path. Since the image is typically not stigmatic (or not in focus) other light rays of the light fields have a path difference that manifests itself in a variation of the interference. On the detector, an interferogram is therefore measured in intensity. From the measurement of different interferograms at different phase positions (via e.g., the phase shifting unit) the complex interferogram **IF** may be determined.

The first light field and/or the second light field may be constructed from the complex interferogram. This may correspond to a physical and/or mathematical propagation of the first light field and/or the second light field back to the exit pupil (so-called "trace back") and, from there, taking the path of the other interferometer arm (e.g., the second interferometer arm in the case of tracing back the first light field and the first interferometer arm in case of tracing back the second light field) to the detector. At the detector, this field corresponds to the field from the other interferometer arm. The first light field and the second light field may therefore be related. Since the optical imaging ratios for the first light field and the second light field may be identical up to the respective principal plane, the fields may be the same on this plane (although at different locations). Thus, to bring the fields to the same location, the first light field, for example, may be brought up to the principal plane of the second interferometer arm from the second light field and vice versa for the first light field. This may be done in such a way that the central ray has the same optical path length at the location of the superposition. Analogously, the procedure can be carried out for the conjugate planes, wherein the principal plane is replaced by the conjugate plane. For this case, the two fields differ only by the piece of propagation from the principal plane of the first interferometer arm to the principal plane of the second interferometer arm. So it may not be necessary to make the optical path back to the exit pupil and forward again to the principal or conjugate plane. This simplifies the analysis and evaluation considerably.

However, this may only be correct for the entire Field of View if the system is telecentric on the image side, because only then are the overlaps exact and the propagation directions at an angle of 90° to the detection plane. The relation between the first light field and the second light field can thus be represented by an optical propagation over the distance of the principal plane splitting. This is mathematically a unitary transformation (also referred to as mapping). The unitary transformation may be represented by a propagator matrix U ("mapping U"). The propagation can be represented mathematically, e.g. as a Fresnel integral or the propagator of the Helmholtz equation, or a Fresnel diffraction integral, the Huygens-Fresnel Principle, or the Debye integral (see, for example, "Born Principles of Optics", M. Born and E. Wolf, Cambridge University Press, 8th printing 2013, Chapter 8.2).

The interferometer therefore may be suitable to measure a characteristic of the light field (the complex interferogram IF) and the interpretation of the characteristic can be based on the knowledge of the principal plane splitting (and/or the knowledge of the mapping [the unitary transformation] from the first light field to the second light field).

In at least some examples, the interferometer, e.g. a length of the interferometer arms, may be calibrated before and/or during and/or after an object is measured with the interferometer. Calibration may comprise selecting a detector reference part (e.g., a section of the detector) that detects a reference interferogram that is already known. The calibration may comprise measuring an interferogram in the detector reference part. In some examples, the reference interferogram may be additionally or alternatively measured together with the object. The known reference interferogram may be compared to the measured interferogram. The measured interferogram may differ in a global phase (i.e., *e^{iϕ}*) from the reference interferogram. The measured interferogram may be calibrated to the fixed phase of the known reference interferogram. Even with a small change of the optical path lengths of the interferometer, the calibrated interferogram may remain unchanged in global phase.

The calibration may be performed with a calibration light source, e.g. a laser source. The calibration light source may be blocked during measurement of the image of the object. In such a case, however, a further detector may be required.

For evaluating the complex interferogram IF, it may be advantageous to distinguish whether the measurement was made with spatially coherent light or incoherent light.

In the case of spatial coherent light, the procedure is described in detail in patent publication US 10,823,547 B2. The mapping U introduced in the present disclosure, which maps the first light field onto the second light field, corresponds to the propagator mapping U in US 10,823,357 B2. In order to apply the method, it may be necessary to know the intensity for the first light field and the second light field (i.e., |E1|² and |E2|²). The measurement of this quantity can be done e.g. by blocking one of the interferometer arms and measuring only the intensity originating from other interferometer arm. Alternatively or in addition, an independent second camera for the intensity image can be integrated into the setup, e.g. via a beam splitter, in addition to the interferogram. As a result of the calculation, the individual complex field E1(x,y) and/or E2(x,y) is determined from the complex interferogram IF(x,y). This may be the quantity to be determined in quantitative phase microscopy. The device can thus be used as a quantitative phase microscope.

A different situation is when the complex interferogram IF is recorded with incoherent light. The procedure is illustrated in international patent application publication US 2022/034645 A1. This publication refers to the situation where, for a given object location, self-referencing a light beam (e.g., a spot) with itself leads to a complex point spread function. The point spread function contains parts of the diffraction of the light at the exit pupil of the frontside optics (see, for example, "Born Principles of Optics", M. Born and E. Wolf, Cambridge University Press, 8th printing 2013, Chapter 8.8). Due to the image-side telecentricity and the perfect overlap, the shape of the point spread function does not change with lateral displacement of the object point in the field of view. The image information can be reconstructed e.g. by refolding with the point spread function, such as described in US 2022/034645 A1. Refolding is the mathematical inverse operation to folding. The point spread function for different z-positions of the object point is different. Therefore, different z-locations can be distinguished in the image. The methodology thus allows a 3D reconstruction of the object. The process of folding and refolding can be called propagation. The corresponding function is also called the propagation operator.

According to at least some aspects of the disclosure, the measured interference spots can be brought into and out of focus via a mathematical propagation operator. Interference images for new focal locations can thus be computed electronically. Assuming such an arbitrary focal location, the collection of Gaussian-like interference spots IF(x,y) can be squared point-wise, for example. A new image, corresponding to a new interferogram, IF'(x,y) = IF(x,y)² is formed. In this image, each spot may be re-sharpened by squaring, i.e., gives a sharper spot when propagated into focus. In addition, a ghost spot may be created between all different pairs of spots at half lateral distance. This ghost spot opposes the re-sharpening: the image is sharper but contains artifacts. The procedure of squaring is usually done at an arbitrarily chosen electronic distance position. If the results are compared for different quadrature distances, it can be seen that the phasing for individual squared single spots (called single spot) is different from that for the superposition of different spots, i.e. the ghost spot at half way. The different behavior of the single spots and the ghost spots allows to decide over a number of different frames which image parts originate from artifacts. The re-sharpened image can thus be freed from the artifacts.

According to at least some aspects, a method for determining a characteristic of an input light field may comprise generation at least two intermediate interference patterns from the measured interference pattern, e.g. at mutually different focal points and/or at different electronic focus positions. For example, the intermediate interference patterns may be electronically generated, e.g. by convolution of the measured interference pattern with a propagation kernel for a chosen propagation distance. The at least two intermediate interference patterns may then be processed with an algebraic method. For example, the algebraic method may comprise at least one of: subtracting the processed images from each other (e.g., using a linear per-pixel complex weighted function), pixel-by-pixel squaring and/or multiplication with a chirp function. Before or after the processing, a filter function may be applied to the at least two intermediate interference patterns, thereby creating a result image. The filter function may, for example, be a linear combination of the intermediate images.

The method steps (i.e., generating the intermediate interference patterns, processing the intermediate interference patterns and applying the filter function), may be repeated iteratively, e.g. at least two times. The created result image of a previous iterative cycle may be used as a measured interference pattern in the following iterative cycle. For each cycle, the algebraic method of the previous cycle may be used or it may be possible to apply a new pixel-by-pixel manipulation rule. The result can be an image that is sharper, i.e., fine features can be better detected. The resulting image can be less noisy, since it is averaged over several images. The result image may have (electronically) changed values in the z-component.

Compared to the original data, the result image can be focused on a plane different from the detector plane. This may correspond to electronic focus and re-focus. By this, aberrations in the used optics (e.g. in the object, the frontside optics, the entrance optics, and/or the first and/or second optical system) may be compensated and at least parts of the image can be reproduced sharper.

According to at least some aspects, the method may comprise re-shaping the measured interference pattern by an electronic inverse convolution of the measured interference pattern with a re-shape function. The re-shaping may be done before generating the at least two intermediate interference patterns. The re-shape function may be chosen such that steps in the intermediate interference patterns are avoided. For example, it is possible to remove the diffraction influence of the exit pupil of the frontside optics in a separate step to facilitate subsequent processing. For this purpose, the diffraction pattern is determined for a specific focal position (or z-position). The result can be called a re-shape function. The correction can be done e.g. by a refolding. This corresponds to the inverse of the convolution. This method allows to remove the diffraction influence for a collection of object points in the interferogram. Such a corrected interferogram consists of the superposition of Gaussian-like complex interference spots.

The method may benefit from an incoherence of the resolvable object points with respect to one another. The measured interference pattern (interferogram) may therefore be a superposition of complex point spread functions. That is to say, the interference of isolated object points may be measured in the method.

An incoherent illumination may be called "ideally incoherent" when different points in the object field that can be resolved by the front optics receive mutually incoherent illumination light. According to some aspects of the disclosure, some or all of the light rays of the light field originating from the object may be coherent to each other. In this context, "coherent light field" may refer to the situation where light rays interfere, provided the path difference is within the coherence length. The term incoherent light is used to denote light fields where the light rays are coherent only if they originate from the same point source. Also, for the coherent case it is assumed that the structure of the light field is characterized by point-like disturbances from which radial scattered light fields originate. If for this situation the term "imaging" is used, then this means that the point-like disturbances are imaged. It may not be possible to image a possibly existing background field, e.g. the field from a brightfield illumination in a microscope, with an interferometer according to aspects of the disclosure. A point-like disturbance can lead both to light being emitted in other directions, or to the situation that light is missing (like a shadow). Perturbations in a light field from coherent illumination can be elastic scatterers, i.e. the outgoing light fields are in a complex phase relationship and the light fields from different scatterers can interfere, provided the optical path difference is less than the coherence length. Interference relations are typically more complex for coherent light than for incoherent light. An object can only emit a coherent scattered light field if it is coherently illuminated. The coherence might be required to be such that all disturbances that come to interfere within the interferometer are within the coherence volume of the illumination. In other words: within the spatial and temporal coherence, the disturbances are usually coherently illuminated. The illumination can be done in such a way that the illumination light enters the interferometer and reach the detector (Brightfield Illumination), or in such a way that the illumination light does not enter the interferometer (Darkfield Illumination).

According to at least some examples, the object is suitably illuminated. In particular, the illumination may allow for coherent and/or incoherent light rays to be emitted by the object. Due to the optical path equality, the coherence requirements are also low in the coherent case. Possible illumination devices for the interferometer in this case are lasers, super luminescent LEDs or LEDs. In the incoherent case, incoherent illumination is required, e.g. critical illumination or Köhler illumination. The illumination can be in e.g. transmission, in reflection or EPI illumination. It is also possible to measure the photoluminescence, the illumination spectrally blocking. Incoherent illumination is called "ideally incoherent" when different points in the object field that can be resolved by the front optics receive mutually incoherent illumination light. This situation may also be described with the expression: "incoherent within the resolution".

Further aspects of the present disclosure relate to an interferometer assembly. The interferometer assembly may comprise a telecentric interferometer (e.g., an image-side telecentric interferometer) according to examples described herein. The interferometer assembly may further comprise an illumination device. The illumination device may be adapted for illuminating an object with illumination light such that different object points of the object coherently reflect or transmit part of the illumination light. Alternatively, the illumination device may be adapted for illuminating the object with illumination light such that different object points of the object incoherently scatter or transmit the illumination light, in particular within the resolution. This means that points located at the distance of the resolving power of the front optics are illuminated incoherently and thus scatter mutually incoherent light.

The illumination may be such that unscattered or specularly reflected illumination light reaches the detector (so-called "bright field"). Alternatively, the unscattered or specularly reflected illumination light may not reach the detector (so-called "dark field"). The illumination may be performed such that different parts of the object are illuminated at different times (so-called "structured illumination") and/or in different wavelength ranges. The latter can be measured with wavelength resolution using different detectors via beam splitters or color filters.

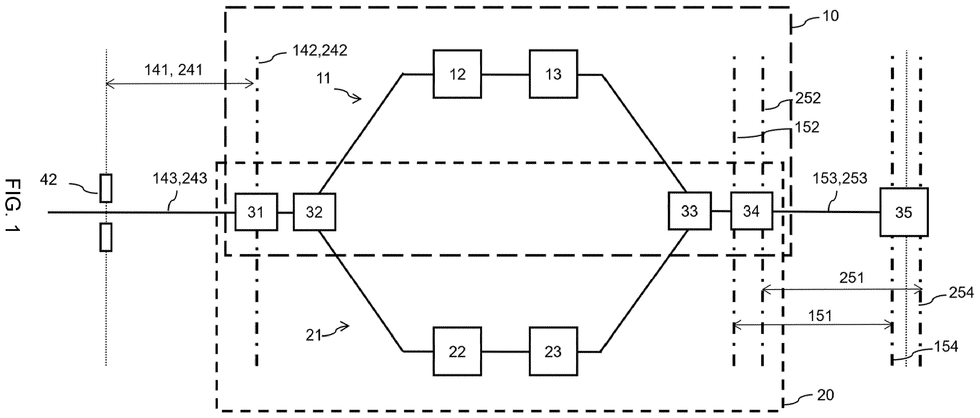

Referring to the schematic illustration of Fig. 1, a telecentric interferometer according to aspects of the disclosure is described in detail. The telecentric interferometer comprises a first optical system 10 and a second optical system 20. The first optical system 10 comprises a first interferometer arm 11 with a shifting unit 12 and a correction unit 13. The second optical system 20 comprises a second interferometer arm 12 with a shifting unit 22 and a correction unit 23. Other variations of the telecentric interferometer may comprise a first interferometer arm 11 with a shifting unit 12 and no correction unit 13 and/or a second interferometer arm 12 with a correction unit 23 and no shifting unit 22. Combinations of these configurations are possible (e.g., a shifting unit 12, 22 in both interferometer arms 11, 21 and a correction unit 13, 23 in only one of the interferometer arms 11, 12). Part of the shifting unit 12 of the first interferometer arm 11 may also be located outside of the first interferometer arm 11 within the first optical system 10. The same may be true for the shifting unit 22 of the second interferometer arm 12. The first optical system 10 may further comprise an entrance optics 31, a beam splitter 32, a beam combiner 33, and an exit optics 34. The entrance optics 31, the beam splitter 32, the beam combiner 33, and the exit optics 34 may also be part of the second optical system 20.

The telecentric interferometer comprises a detector 35 and an exit pupil 42 of a frontside optics (not shown in Fig. 1). The exit pupil 42 is located upstream (i.e., on an object side) of the first optical system 10 and the second optical system 20. The detector 35 is located downstream (i.e., on an image side) of the first optical system and the second optical system 20. The detector 35 may comprise a plurality of pixels. The detector may be or may comprise a CMOS sensor (e.g., a CMOS sensor array).

The first optical system 10 has an object-side focal length 141, an object-side principal plane 142, an object-side optical axis 143, a Gauss image distance 151, an image-side principal plane 152, an image-side optical axis 153, and an image-side conjugate plane 154. The second optical system 20 has an object-side focal length 241, an object-side principal plane 242, an object-side optical axis 243, a Gauss image distance 251, an image-side principal plane 252, an image-side optical axis 253, and an image-side conjugate plane 254. For both the first optical system 10 and the second optical system 20, the respective optical properties (e.g., the object-side focal length 141, 142, the object-side principal plane 142, 242, the object-side optical axis 143, 243, etc.) reflect the optical properties of the entire optical system.

First referring to the object side of the first and second optical system 10, 20. The object-side principal plane 142 of the first optical system 10 is identical to (i.e., has the same position as) the object-side principal plane 242 of the second optical system 20. The object-side focal length 141 of the first optical system 10 and the object-side focal length 241 of the second optical system 20 are identical. In the current example, the entrance optics 31 of the first optical system 10 and the second optical system 20 is positioned at the object-side principal plane 142 of the first optical system 10 and the object-side principal plane 242 of the second optical system 20. Other designs are possible according to this disclosure.

The exit pupil 42 is positioned at an object side of the first optical system 10 and the second optical system 20. In other words: an object to be imaged (not shown in Fig. 1) can be positioned upstream the exit pupil 42 and the exit pupil 42 can be positioned between the first optical system 10 and the second optical system 20 on the one hand and the object on the other hand. The distance of the exit pupil 42 to the object-side principal plane 142, 242 of the first and second optical system 10, 20 corresponds to the object-side focal length 141, 142 of the first and the second optical system 10, 20. By positioning the exit pupil 42 in such a manner, a telecentric interferometer (in particular, an image-side telecentric interferometer) may be achieved. The image of the exit pupil 42 is thereby shifted to infinity in the image space, which corresponds to the telecentric configuration.

Now referring to the first optical system 10 and the second optical system 20. The entrance optics 31 may be or may comprise at least one of: a lens, a (curved) mirror, a photo lens, a tube lens, a microscope objective, a telescope, or another beam-shaping element. The entrance optics 31 is located upstream of the beam splitter 32. In some examples, the beam splitter 32 may be part of the entrance optics 31. The beam splitter 32 may split an input light field into a first light field and a second light field (not shown in Fig. 1). The first light field propagates through the first interferometer arm 11 and the second light field propagates through the second interferometer arm 21.

The first interferometer arm 11 and the second interferometer arm 12 have identical optical path lengths, but different geometrical path lengths. This is achieved by the shifting unit 12 of the first optical system 10 and/or the shifting unit 22 of the second optical system 20. For simplicity, the principle of the shifting unit is explained for the shifting unit 12 of the first optical system 10. The following explanation applies, mutatis mutandis, to the shifting unit 22 of the second optical system 20. The shifting unit 12 of the first optical system 10 may alter (e.g., shorten or lengthen) the geometrical path length of the first interferometer arm 11 compared to a first optical system 10 without a shifting unit 12. This results in shifting the image-side principal plane 152 of the first optical system 10. A geometrical path length of the first interferometer arm 11 is further adjusted such that it compensates for any introduced shift or difference in the optical path length of the first interferometer arm 11 relative to the second interferometer arm 21. For example, if the optical path length of the first interferometer arm 11 is elongated by a length d by the shifting unit 12 of the first optical system 10, the geometrical path length is reduced by said length d compared to the geometrical path length of a first interferometer arm 11 without a shifting unit 12 (and/or d is adjusted for any refractive index n in the optical path). As an example, the geometric or optical path can be adjusted by moving at least one mirror in one of the first interferometer arm 11 and the second interferometer arm 21 of a dual path interferometer. It may be preferred that the two interferometer arms 11, 21 have separate paths and mirrors, i.e. cannot be common path. The shifting unit 12 of the first optical system 10 and the shifting unit 22 of the second optical system 20 are adapted to shift the image-side principal plane of the first optical system 10 relative to the image-side principal plane 252 of the second interferometer arm 21 such that the image-side principal plane 152 of the first optical system 10 is different from the image-side principal plane 252 of the second optical system 20, with the optical path length of the first interferometer arm 11 being equal to the optical path length of the second interferometer arm 21.

The first optical system 10 and/or the second optical system 20 may further comprise a respective correction unit 13, 23. The correction unit 13, 23 is adapted for correcting a chromatic change in the optical path length of the respective optical system 10, 20 caused by the shifting unit of the respective optical system 10, 20. The correction unit 13, 23 may, for example, be a dielectric plate. The focal length of the correction unit 13, 23 may approach infinity. Different to the depiction in Fig. 1, the correction unit 13 (e.g., at least part of the correction unit 13) of the first optical system 10 may be part of the shifting unit 12 of the first optical system 10. This may be true, mutatis mutandis, for the correction unit 23 and the shifting unit 22 of the second optical system 20.

After passing through the first interferometer arm 11 and the second interferometer arm 21, respectively, the first light field and the second light field are combined with the beam combiner 33 and the combined light field propagates through the exit optics 34. For example, the exit optics comprises a lens for correcting the different focal lengths of optical components in the first interferometer arm 11 and the second interferometer arm 21, to then form the respective image planes for the first interferometer arm 11 and the second interferometer arm 21 near the detector 25.

Now referring to the image side of the first and second optical system 10, 20. The image-side principal plane 152 of the first optical system 10 has a different position than the image-side principal plane 252 of the second optical system 20. This is caused by the shifting unit 12, 22. The detector 35 between the image-side conjugate plane 154 of the first optical system 10 and the image-side conjugate plane 254 of the second optical system 20. The image-side conjugate plane 154, 254 is distanced from the image-side principal plane 152, 254 of the respective optical system 10, 20 by the Gauss image distance 151, 251 of the respective optical system 10, 20. The detector 35 is out-of-focus for both the image originating from the first optical system 10 and the image originating from the second optical system 20, but the deviation from the focus is small enough to allow for analyzing the interference pattern between the first light field and the second light field.

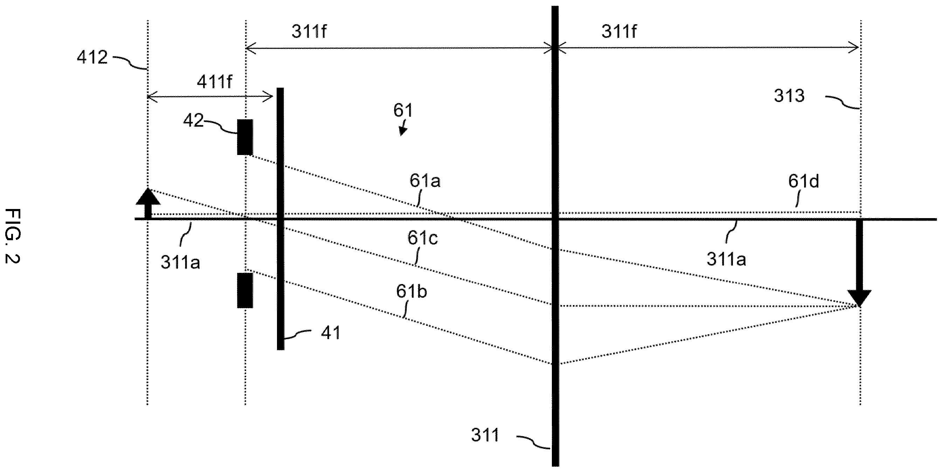

Fig. 2 illustrates the principle of a telecentric optical system in the case of a simple optical system with only a lens 311, which stands for the first optical system 10 and the second optical system 20 in this example. For simplicity, the lens 311 is drawn as a thin lens, i.e., the object-side principal plane coincides in the drawing with the image-side principal plane. An object-side focal length of the lens 311 is identical to an image-side focal length of the lens 311, i.e. identical refractive index (focal length 311f of the lens 311). The object-side optical axis is also identical to the image-side optical axis (optical axis 311a). The same optical medium is assumed in the object space and the image space.

For explaining the effect of a telecentric system, a small arrow is depicted as an exemplary object on the left-hand side of Fig. 2. A light field 61 with a first ray 61a, a second ray 62b and a chief ray 61c originates from an object point of the object. The central ray 61d runs along the optical axis 311a (for better visibility, the central ray 61d is depicted slightly off-axis). In the simplified illustration of Fig. 2, the image-side optical axis coincides with the object-side optical axis. The light field 61 passes an exit pupil 42 of a frontside optics 41. For simplicity, it is assumed that the two principal planes of the optics coincide. The first ray 61a and the second ray 62b may correspond to the outer rays (so-called marginal rays) of the light field 61 that can pass the exit pupil 42. The chief ray 61c intersects the optical axis 311a at the exit pupil 42. As a mere example, the arrowhead is used as the object point, from which the chief ray 61c originates. For simplicity, the frontside optics 41 is positioned so that the distance from the first principal plane of the frontside optics 41 to the object (arrow) is a focal length 411f of the frontside optics 41. The lens 311 is distanced from the exit pupil 42 by the focal length 311f of the lens 311. The lens 311 could be the Gaussian reduction of a much more complex optical system. To simplify the drawing, a vanishing principal plane splitting is assumed.

The light field 61 passes through the lens 311. On the image side of the lens 311, the image position 313 is distanced by the focal length 311f from the lens 311. The chief ray 61c intersects the optical axis 311a at the position of the exit pupil 42 and is parallel to the optical axis 311a at the image side.

This corresponds to an image-side telecentric system. Telecentricity in object or image space requires that the chief ray 61c be parallel to the axis in object or image space, respectively. As a consequence, the apparent system magnification is constant even if the object or image plane is displaced from its nominal position. The image will be blurred, but of the correct size or magnification.

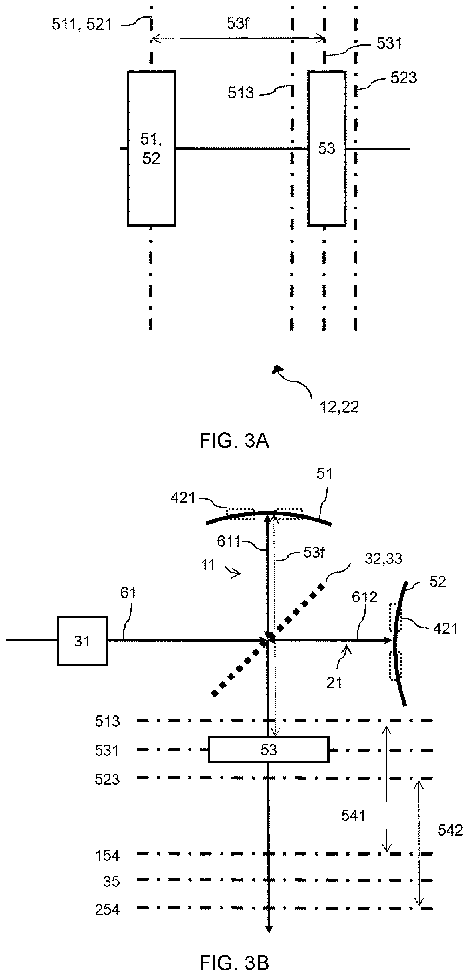

Referring to the schematic illustrations of Figs. 3A and 3B, the principle of a shifting unit 21,22 of a telecentric interferometer according to aspects of the disclosure is explained in detail. Fig. 3A schematically illustrates a simplified scheme of the shifting unit 12,22. The shifting unit 12,22 comprises a weak lens 51, 52 and a strong lens 53. The strong lens 53 is in both the first optical system 10 and the second optical system 20, but outside the first interferometer arm 11 and the second interferometer arm 21 (not shown in Fig. 3A). In some examples, the shifting unit 12 of the first optical system 10 may comprise a first weak lens 51 (e.g., positioned in the first interferometer arm 11) and the shifting unit 22 of the second optical system 20 may comprise a second weak lens 52 (e.g., positioned in the second interferometer arm 21). Fig. 3A depicts the first weak lens 51 and the second weak lens 52 as only one component to simplify the illustration. However, the first weak lens 51 and the second weak lens 52 are different lenses and they are positioned in different interferometer arms 11, 12.

A principal plane 511 of the first weak lens 51 and a principal plane 521 of the second weak lens 52 may coincide. A principal plane 531 of the strong lens 53 is distanced from the principal planes 511, 521 of the first and second weak lens 51, 52 by the object-side focal length 53f of the strong lens 53. The principal planes 511, 521, 531 of the first weak lens 51, the second weak lens 52 and the strong lens 53, respectively, are considered in the thin-lens approximation (no principal plane splitting).

The first weak lens 51 and the second weak lens 52 may have different focal lengths. For example, the focal length (e.g., the object-side focal length) of the first weak lens 51 may have a different sign than the focal length (e.g., the object-side focal length) of the second weak lens 52. The focal length of the first weak lens 51 may have the same magnitude as the focal length of the second weak lens 52. For example, the first weak lens 51 is a diffusing lens and the second weak lens 52 is a converging lens or vice versa. Both the focal length of the first weak lens 51 and the focal length of the second weak lens 52 may be larger than the object-side focal length 53f of the strong lens 53.

The Gauss-reduced combination of the first weak lens 51 and the strong lens 53 may have a first image-side principal plane 513 and the Gauss-reduced combination of the second weak lens 52 and the strong lens 53 may have a second image-side principal plane 523. The first image-side principal plane 513 and the second image-side principal plane 523 have different locations. In other words, the first image-side principal plane 513 and the second image-side principal plane 523 are shifted with respect to each other. Both the first image-side principal plane 513 and the second image-side principal plane 523 may also differ from the principal plane 531 of the strong lens 53. The difference between the first image-side principal plane 513 and the second image-side principal plane 523 corresponds to the magnitude of the shift of the shifting unit 12,22. If both the first interferometer arm 11 and the second interferometer arm 21 comprise a weak lens (i.e., the first weak lens 51 and the second weak lens 52, respectively), the shifting unit 12, 22 is located in both the first optical system 10 and the second optical system 20.

Fig. 3B illustrates an example of the shifting unit 12, 22 in combination with a first interferometer arm 11 and a second interferometer arm 21 of the interferometer. A light field 61 originating from an object passes through a frontside optics with an exit pupil (not shown in Fig. 3B). The light field 61 then passes through an entrance optics 31 of the interferometer. The imaging through the entrance optics 31 generates a real or a virtual image 314 (not shown in Fig. 3B). For example, the virtual image 314 may also be at infinity. The shifting unit 12, 22 may be independent of the location of the intermediate image 314. The light field 61 is then divided into a first light field 611 and a second light field 612 by a beam splitter 32 that also acts as a beam combiner 33. The first light field 611 propagates through the first interferometer arm 11 and the second light field 612 propagates through the second interferometer arm 21. The first interferometer arm 11 comprises a first weak lens 51 and the second interferometer arm comprises a second weak lens 52. The first weak lens 51 is a concave mirror lens that converges the first light field 611 and the second weak lens 52 is a convex mirror lens that diffuses the second light field 612. After passing through the first interferometer arm 11 and the second interferometer arm 21, respectively, the first light field 611 and the second light field 612 are combined by the beam splitter/combiner 32,33 and the combined light field propagates through a strong lens 53 with a principal plane 531. The strong lens 53 is distanced from the first weak lens 51 and the second weak lens 52 by the object-side focal length 53f of the strong lens 53.

The first weak lens 51 and the second weak lens 52 are both positioned at the image of the exit pupil 421 by the entrance optics 31. The first light field 611 is shifted (i.e. defocused) relative to the second light field 612 due to the combination of the first weak lens 51, the second weak lens 52 and the strong lens 53, which in combination act as a shifting unit. Therefore, the first image-side principal plane 513 of the Gauss-reduced combination of the first weak lens 51 and the strong lens 53 differs from the second image-side principal plane 523 of the Gauss-reduced combination of the second weak lens 52 and the strong lens 53. The light beam is then imaged onto a detector 35 by an optics (not shown). Due to the shifting unit, the image-side conjugate plane 154 of the first optical system 10 comprising the first interferometer arm 11 differs from the image-side conjugate plane 254 of the second optical system 20 comprising the second interferometer arm 21. The detector 35 may be located between the conjugate planes 154 and 254. The image-side conjugate plane 154 of the first optical system 10 is distanced from the first image-side principal plane 513 by a Gauss image distance 541 for the first optical system 10. The image-side conjugate plane 254 of the second optical system 20 is distanced from the second image-side principal plane 523 by a Gauss image distance 542 for the second optical system 10. In the example shown in Fig 3B, the Gauss image distance 541 for the first optical system 10 and the Gauss image distance 542 for the second optical system 20 are identical. The Gauss image distance 541, 542 for the first optical system 10 or the second optical system 20 depends on the distance between the intermediate image 314 (not shown in Fig. 3B) of the object and the object-side principal plane of the strong lens 53. However, the Gauss-image distance can be independent of the strength of the weak lenses 51, 52. This is a result of the specific design and means that the strong lens 53 compensates for the different focal lengths of the weak lenses 51, 52. This also means that the layout and power of the strong lens 53 as described does not depend on the local position of the intermediate image 314, but on the local position of the weak lenses 51, 52.

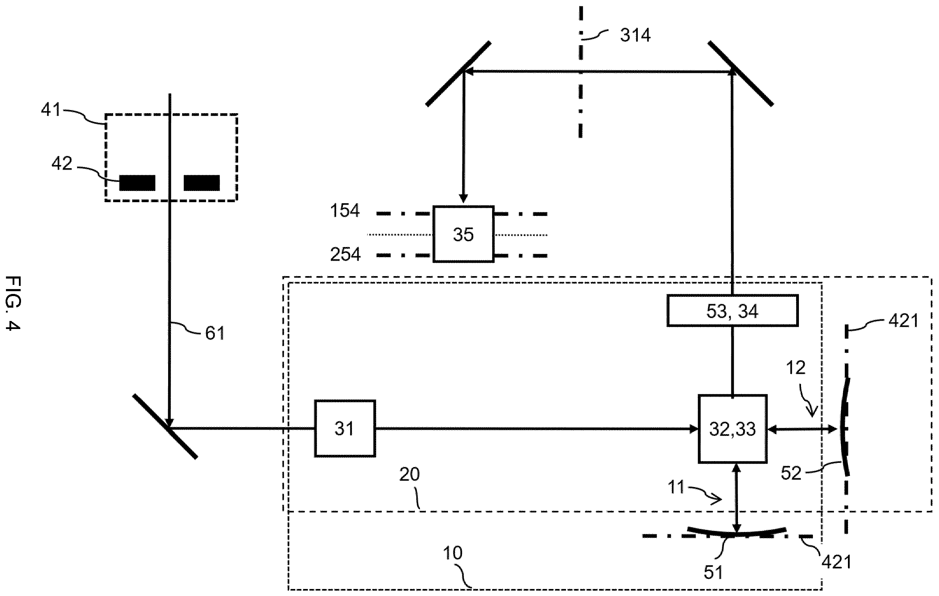

Fig. 4 schematically depicts an interferometer according to aspects of the present disclosure. The shifting unit of the interferometer is implemented as in the example shown in Fig. 3B. That is to say, the shifting unit comprises the first weak lens 51, the second weak lens 52 and the strong lens 53. The interferometer shown in Fig. 4 comprises a frontside optics 41 comprising an exit pupil 42. In some examples, the frontside optics 41 may be an external optics, while the rest of the optics depicted in Fig. 4 is part of an apparatus.

Downstream the frontside optics 41, an entrance optics 31 is located. The entrance optics 31 is followed by a beam splitter/combiner 32, 33 (see also Fig. 3B above). The beam splitter/combiner 32, 33 defines a first interferometer arm 11 and a second interferometer arm 21. The first interferometer arm 11 comprises a first weak lens 51 in the form of a concave mirror. The second interferometer arm 21 comprises a second weak lens 52 in the form of a convex mirror. Downstream the beam splitter/combiner 32, 33, the strong lens 53 is located. The strong lens 53 is followed by some further optics (as a mere example, mirrors are depicted in Fig. 4) and some optional further exit optics (not shown in Fig. 4). The strong lens 53 may be seen as part of an exit optics of the two interferometer arms 11, 21. A detector 35 is located downstream the strong lens 53. The detector 35 may be located between the conjugate planes 154 and 254.

The entrance optics 31, the first interferometer arm 11 (i.e., its optics) and the strong lens 53 are part of a first optical system 10. The entrance optics 31 and the strong lens 53, together with the second interferometer arm 21 (i.e., its optics) are part of a second optical system 20.

A light field 61 originating from an object passes through the frontside optics 41 and the exit pupil 42. The light field 61 is then imaged by the entrance optics 31 to an (virtual) intermediate image 314. The light field 61 passes the beam splitter/combiner 32, 33 and is split into a first light field and a second light field, which pass through the first interferometer arm 11 and the second interferometer arm 21, respectively, and are then combined to a common light field, again. The light field propagates through the strong lens 53 and to the detector 35. The combination of the first weak lens 51, the second weak lens 52, and the strong lens 53 results in a shift of the image-side conjugate plane 154 of the first optical system 10 relative to the image-side conjugate plane 254 of the second optical system 20. The detector can be placed in the range in between.

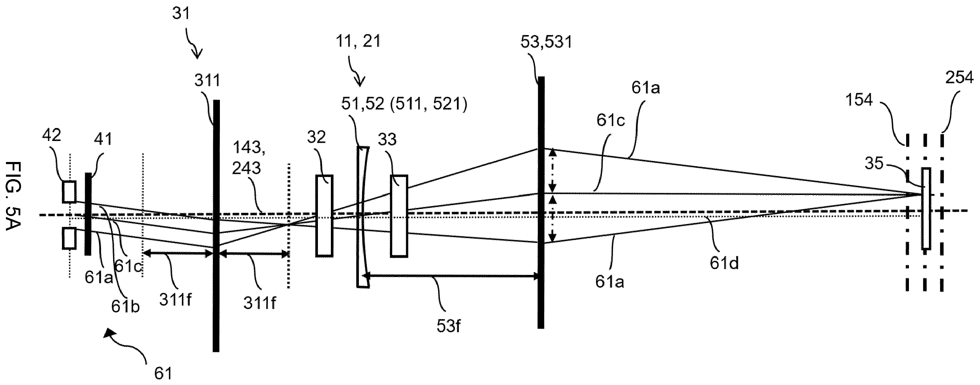

Fig. 5A depicts an interferometer according to aspects of the disclosure. The interferometer comprises a frontside optics 41 with an exit pupil 42, an entrance optics 31 with a lens 311, a beam splitter 32, a weak lens 51, 52 (e.g., a first weak lens 51 or a second weak lens 52), with a principal plane 511, 521, a beam combiner 33, a strong lens 53 with a principal plane 531, and a detector 35. Reference signs 143 and 243 denote the optical axis.

The focal length 311f of the lens 311 of the entrance optics 31 may, for example, be at least 150 mm and at most 250 mm, e.g. 200 mm. The lens 311 may be a converging or a diffusing lens, depending on the (optional) other parts of the entrance optics 31 (not shown in Fig. 5A). For example, the lens 311 is a tube lens (e.g., an achromatic tube lens) or a relay lens. The entrance optic 31 maps the exit pupil 42 of the frontside optics 41 to the principal plane 511 of the first weak lens 51 (in the case of the first interferometer arm 11) and/or to the principal plane 521 of the second weak lens 52 (in the case of the second interferometer arm 21). The principal plane 511 of the first weak lens 51 and the principal plane 521 of the second weak lens 52 thus lie in the image plane 421 of the exit pupil 42 via the entrance optics 31.

The beam splitter 32 is positioned on the image-side of the lens 311 and defines the first interferometer arm 11 and the second interferometer arm 21. For simplicity, only a single interferometer arm is depicted in Fig. 5A, which represents either the first interferometer arm 11 or the second interferometer arm 21. The following description applies, mutatis mutandis, to the other interferometer arm.

The interferometer arm 11, 21 comprises the weak lens 51, 52 - in the case of the interferometer arm being the first interferometer arm 11, the first interferometer arm comprises the first weak lens 51 and in the case of the interferometer arm being the second interferometer arm 21, the second interferometer arm 21 comprises the second weak lens 52. The weak lens 51, 52 is depicted as a diffusing lens, but a converging lens may also be possible. For example, the first interferometer arm 11 may comprise a diffusing first weak lens 51 and the second interferometer arm 21 may comprise a converging second weak lens 52 or vice versa. The weak lens 51, 52 may, for example, have a focal length of at least 50 cm and at most 200 cm, e.g. at least 80 cm and at most 120 cm, e.g. 100 cm (with a positive sign in the case of a converging lens and a negative sign in the case of a diffusing lens). The weak lens 51, 52 may be a (deliberately) chromatic lens.

The beam combiner 33 (which may be a different or the same optical component as the beam splitter 32) combines the two interferometer arms 11, 21. Downstream the beam combiner 33, the strong lens 53 is positioned in the interferometer. The principal plane 531 of the strong lens 53 (e.g., the strong lens 53 itself) is distanced from the principal plane 511, 521 of the weak lens 51, 52 by the focal length 53f of the strong lens 53. The focal length 53f of the strong lens 53 may, for example, be at least 5 cm and at most 30 cm, e.g. at least 10 cm and at most 20 cm, e.g. 15 cm. The detector 35 is positioned on the image-side of the strong lens 53, between the image-side conjugate plane 154 of first optical system having the first interferometer arm 11 and the image-side conjugate plane 254 of the second optical system having the second interferometer arm 21.

A light field 61 originating from an object (not depicted in Fig. 5A) passes through the exit pupil 42. The light field 61 comprises a first ray 61a, a second ray 61b and a chief ray 61c. The first ray 61a and the second ray 61b are equally spaced from the chief ray 61c. When the object point moves to the optical axis, the chief ray 61c becomes the central ray 61d. The central ray 61d is drawn slightly off-axis for better visibility. The first ray 61a and the second ray 61b are equally spaced from the chief ray 61c.

The light field 61 propagates through the lens 311 and is split into two parts at the beam splitter 32. The chief ray 61c in the interferometer arm 11, 21 crosses the optical axis 143, 243 at the position of the weak lens 51,52. After passing the first interferometer arm 11 and the second interferometer arm 21 having the first weak lens 51 and the second weak lens 52, respectively, the two parts are combined with the beam combiner 33 and propagate through the strong lens 53f. The combination of the first weak lens 51 and the strong lens 53 and/or the second weak lens 52 and the strong lens 53 results in a shift of the optical path length of the first interferometer arm 11 relative to the optical path length of the second interferometer arm 21. The conjugate plane of the first optical system having the first interferometer arm 11 is shifted by the first weak lens 51, but the telecentric property of the interferometer is unaffected. The same applies, mutatis mutandis, to the second interferometer arm 21 and the second weak lens 52. After passing through the strong lens 53, the first ray 61a and the second ray 61b are still equally spaced from the chief ray 61c (indicated by arrows with dash-dotted lines). The chief ray 61c runs parallel to the optical axis 143, 243.

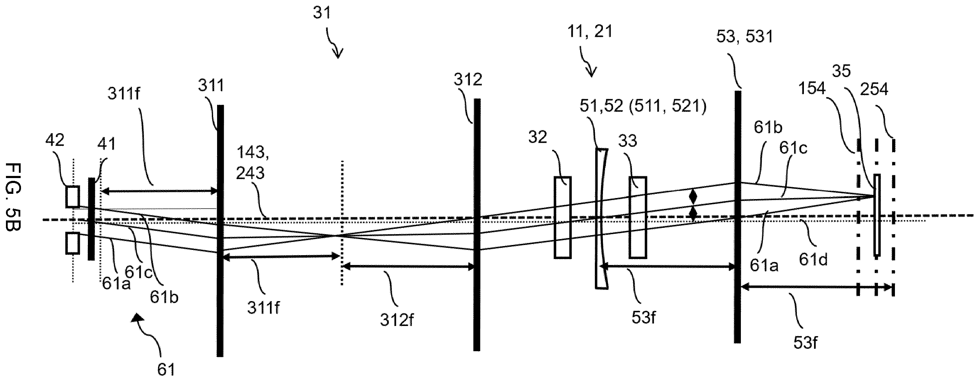

Fig. 5B depicts an interferometer according to aspects of the disclosure. The interferometer depicted in Fig. 5B is constructed similar to the interferometer depicted in Fig. 5A. Therefore, mainly the differences are explained in the following. In contrast to the interferometer of Fig. 5A, the interferometer of Fig. 5B comprises an entrance optics with a first lens 311 and a second lens 312. For example, the first lens 311 and the second lens 312 are converging lenses. However, it may also be possible that the first lens 311 and the second lens 312 are diffusing lenses or that one of the first lens 311 and the second lens 312 is a converging lens and the other one is a diffusing lens. The Gaussian reduction of the focal length 311f of the first lens 311 and the focal length 312f of the second lens 312 shown in Fig. 5B may be similar than the focal length of the lens 311 shown in Fig. 5A. For example, the Gaussian reduction of the focal length 311f of the first lens 311 and the focal length 312f of the second lens 312 may be at least 10 cm and at most 30 cm. The distance between the first lens 311 and the second lens 312 may be chosen such that it is equal (e.g., within a tolerance of ±5% of the distance) to the sum of the focal length 311f of the first lens 311 and the focal length 312f of the second lens 312. The combination of the first lens 311 and the second lens 312 can, for instance, be a Keplerian or Galilean telescope or an afocal system.

In the interferometer shown in Fig. 5B, the light field with the first ray 61a, the second ray 61b and the chief ray 61c propagates through the exit pupil 42 of the frontside optics 41. Afterwards, it propagates through the first lens 311 and the second lens 312. Different to the interferometer shown in Fig. 5A (where the light field is parallel only after passing through the strong lens 53), the interferometer shown in Fig. 5B is configured such that the light rays 61a, 61b, 61c of the light field are parallelized by the combination of the first lens 311 and the second lens 312. The parallelized light rays 61a, 61b, 61c then propagate through the beam splitter 32, the interferometer arms 11, 21 comprising the first weak lens 51 and/or the second weak lens 52, and the beam combiner 33. As for the example depicted in Fig. 5A, in the interferometer depicted in Fig. 5B, the combination of the first weak lens 51 and the strong lens 53 and/or the second weak lens 52 and the strong lens 53 results in a shift of the geometrical path length of the first interferometer arm 11 relative to the optical path length of the second interferometer arm 21. After passing through the weak lens 51, 52 and/or the strong lens 53, the first ray 61a and the second ray 61b are still equally spaced from the chief ray 61c. After passing through the strong lens 53, the chief ray 61c runs parallel to the optical axis 143, 243. Finally, the light field is measured with the detector 35.

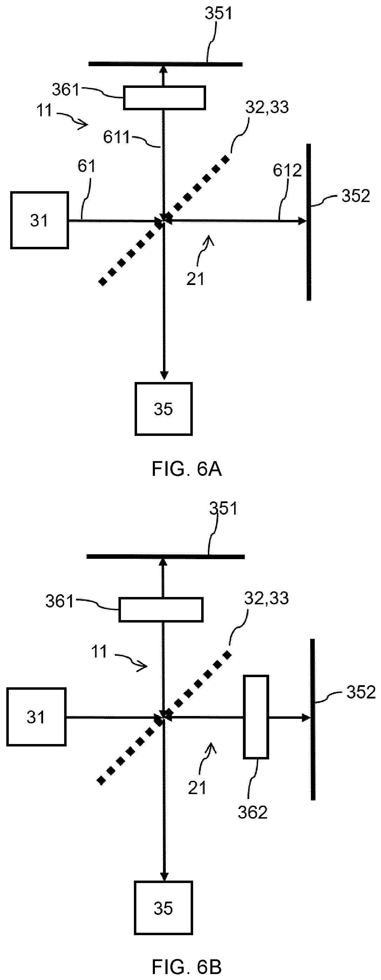

Referring to the schematic illustrations depicted in Figs. 6A and 6B, further aspects of the disclosure are explained in more detail. Figs. 6A and 6B both show a part of an interferometer according to examples of the disclosure. The interferometer comprises an entrance optics 31 and a beam splitter 32 that also acts as a beam combiner 33 and defines a first interferometer arm 11 and a second interferometer arm 21. The first interferometer arm 11 comprises a first mirror 351 and the second interferometer arm 21 comprises a second mirror 352. The interferometer further comprises a detector 35. The interferometer may comprise additional components that are not shown in Figs. 6A and 6B.

In the example shown in Fig. 6A, only the first interferometer arm 11 comprises a dielectric plate (first dielectric plate 361). In the example shown in Fig 6B, both the first interferometer arm 11 and the second interferometer arm 21 comprise a dielectric plate (first dielectric plate 361 and second dielectric plate 362). Both the first dielectric plate 361 and the second dielectric plate 362 (if present) may comprise only a single dielectric plate or may comprise more than one dielectric plates, e.g. stacked together, wherein at least some of the dielectric plates may have different dielectric constants. The first dielectric plate 361 (Fig. 6A) or the first dielectric plate 361 and the second dielectric plate 362 have the function of a shifting unit of the interferometer.

An incoming light field 61 is split into a first light field 611 and a second light field 612 by the beam splitter/combiner 32, 33. The first light field 611 travels through the first interferometer arm 11 and the second light field 612 travels the second interferometer arm 21. In both Fig. 6A and Fig. 6B, the first light field 611 propagates through the first dielectric plate 361. The first dielectric plate 361 results in a change of the optical path length and the geometrical path length of the first light field 611. For example, the first light field 611 is delayed relative to the second light field 612 or vice versa, if the shift is not compensated for. In other words: the first light field 611 may trail the second light field 612 or the first light field may lead the second light field 612, if the shift is not compensated for. In Fig 6A, the second light field 612 propagates through the second interferometer arm 21 without any disturbance by a dielectric medium. To compensate for the shift of the optical path length of the first light field 611 in the first interferometer arm 11, the second interferometer arm 21 may have a longer geometrical path length (or, in case the first light field 611 leads the second light field 612 due to the shift, a shorter geometrical path length) than the first interferometer arm 11.

In Fig. 6B, the second interferometer arm 21 also comprises a dielectric plate (the second dielectric plate 362). The second dielectric plate 362 changes the optical path length and the geometrical path length of the second light field 612. The second dielectric plate 362, however, is different from the first dielectric plate 361. The change in optical and geometrical path length for the first light field 611 therefore is different than for the second light field 612. This results in a change of the optical path length and the geometrical path length of the first light field 611 relative to the second light field 612. To compensate for the relative change in geometrical path length, the geometrical path length of one of the first interferometer arm 11 and the second interferometer arm 21 is chosen longer than the geometrical path length of the other one of the two interferometer arms 11, 21.

After passing through the first interferometer arm 11 and the second interferometer arm 21, respectively, the first light field 611 and the second light field 612 are combined with the beam splitter/combiner 32, 33 and the combined output light field is propagated to the detector 35, where an interference pattern of the first light field 611 and the second light field 612 is measured. The interference arises from the shift of the geometrical path length of the first interferometer arm 11 relative to the geometrical path length of the second interferometer arm 21, but with equal optical path length of the first interferometer arm 11 and the second interferometer arm 21.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the examples of an interferometer and/or a method and/or an interferometer assembly as outlined in the present document may be used stand-alone or in combination with the other examples disclosed in this document. In addition, the features outlined in the context of an interferometer or an interferometer assembly are also applicable to a corresponding method, and vice versa. Furthermore, all aspects of the examples of an interferometer and/or a method and/or an interferometer assembly outlined in the present document may be arbitrarily combined. In particular, the features of the claims may be combined with one another in an arbitrary manner.

## Claims

1. Telecentric interferometer, comprising:
a frontside optics comprising an exit pupil (42);
a first interferometer arm (11) that is part of a first optical system (10) and is located at an image side of the frontside optics; and
a second interferometer arm (21) that is part of a second optical system (20) and is located at the image side of the frontside optics;
a detector (35) that is located at an image side of both the first optical system (10) and the second optical system (20); and
a shifting unit (12, 22) located between the frontside optics and the detector (35);
wherein the first optical system (10) and the second optical system have an identical object-side focal length (141, 241) and an identical Gauss image distance (151, 251);
wherein the first optical system (10) and the second optical system (20) have an identically positioned object-side principal plane (142, 242) with an identical object-side optical axis (143, 243);
wherein the exit pupil (42) of the frontside optics is distanced to the object-side principal plane (142, 242) by the object-side focal length (141, 241); and
wherein the shifting unit (12, 22) shifts an image-side principal plane (152) of the first optical system (10) and/or an image-side principal plane (252) of the second optical system (20) such that:
the image-side principal plane (152) of the first optical system (10) is different from the image-side principal plane (252) of the second optical system (20) and
an optical path length of the first interferometer arm (11) is equal to an optical path length of the second interferometer arm (21).

2. Telecentric interferometer according to the preceding claim,
wherein the image-side principal plane (152) of the first optical system (10) and the image-side principal plane (252) of the second optical system (20) are parallel;
wherein an image-side conjugate plane (154) of the first optical system (10) is different from an image-side conjugate plane (254) of the second optical system (20); and
wherein the detector (35) is located between the image-side conjugate plane (154) of the first optical system (10) and the image-side conjugate plane (254) of the second optical system (20).

3. Telecentric interferometer according to any of the preceding claims,
wherein an image-side optical axis (153) of the first optical system (10) is identical to an image-side optical axis (253) of the second optical system (20).

4. Telecentric interferometer according to any of the preceding claims,
wherein the shifting unit (12, 22) comprises:
a first weak lens (51) located in the first interferometer arm (11) and/or a second weak lens (52) located in the second interferometer arm (12) and
a strong lens (53) located at an image side of the first weak lens (51) and/or the second weak lens (52);
wherein the first weak lens (51) and/or the second weak lens (52) are/is distanced to an object side principal plane (531) of the strong lens by an object-side focal length (53f) of the strong lens (53).

5. Telecentric interferometer according to the preceding claim,
wherein the strong lens (53) is part of both the first optical system (10) and the second optical system (20);
wherein the shifting unit (12, 22) comprises the first weak lens (51) and the second weak lens (52);
wherein a focal length of the first weak lens (51) and a focal length of the second weak lens (52) are equal in magnitude but opposite in sign and/or wherein either the first weak lens (51) or the second weak lens (52) is a concave lens or a convex mirror; and
wherein an object-side focal length (53f) of the strong lens (53) is smaller in magnitude than the focal length of the first weak lens (51) and the focal length of the second weak lens (52).

6. Telecentric interferometer according to any of the two preceding claims,
wherein the interferometer is configured in a Michelson-type configuration;
wherein the shifting unit (12, 22) comprises the first weak lens (51) and the second weak lens (52);
wherein the first weak lens (51) is a concave mirror or a flat mirror and the second weak lens (52) is a convex mirror.

7. Telecentric interferometer according to any of the preceding claims,
wherein the shifting unit (12, 22) comprises a dielectric plate (361,362) located in the first interferometer arm (11) or the second interferometer arm (12);
wherein a refractive index and/or a thickness of the dielectric plate (361,362) is chosen such that:
the optical path length of the first interferometer arm (11) is equal to the optical path length of the second interferometer arm (12) and
a geometrical path length of the first interferometer arm (11) differs from a geometrical path length of the second interferometer arm (12).

8. Telecentric interferometer according to any of the preceding claims, further comprising:
an entrance optics (31) located between the frontside optics on the one hand and the first interferometer arm (11) and the second interferometer arm (12) on the other hand and
an exit optics (34) located between the first interferometer arm (11) and the second interferometer arm (12) on the one hand and the detector (35) on the other hand;
wherein the exit optics (34) is part of both the first optical system (10) and the second optical system (20),
wherein the entrance optics (31) is part of both the first optical system (10) and the second optical system (20) and
wherein the entrance optics (31) is adapted for adjusting the object-side focal length (141) of the first optical system (10) and the object-side focal length (241) the second optical system (20).

9. Telecentric interferometer according to any of the preceding claims,
wherein at least one of the first optical system (10) or the second optical system (20) comprises a correction unit (13, 23) that is adapted for correcting a chromatic change in optical path length in the first optical system (10) and/or the second optical (20) system caused by the shifting unit (12, 22);
wherein a focal length of the correction unit (13, 23) approaches infinity; and
at least one of:
wherein the correction unit (13, 23) comprises at least two dielectric elements with mutually different refractive indices or
wherein the shifting unit (12, 22) comprises a dielectric plate (361, 362) that is also part of the correction unit (13, 23) or
wherein the shifting unit (12, 22) comprises at least one optical element with refractive power and at least one of the Gaussian reduction of all optical elements in the first interferometer arm (11) or the Gaussian reduction of all optical elements in the second interferometer arm (21), including the correction unit (12, 22), has a finite focal length.

10. Telecentric interferometer according to any of the preceding claims, further comprising:
a phase shifting unit arranged in or downstream of at least one of the first interferometer arm (11) or the second interferometer arm (21);
wherein the phase shifting unit comprises at least one of: a movable mirror, a piezoelectric crystal, a circular polarizer, a linear polarizer, a quarter-wave plate, or a polarization-sensitive detector.

11. A method for determining a characteristic of an input light field with a telecentric interferometer according to any of the preceding claims, comprising:
propagating the input light field through the exit pupil of the frontside optics;
dividing the input light field into a first portion and a second portion, wherein the first portion propagates along the first optical system (20) and the second portion propagates along the second optical system (20);
shifting the image-side principal plane (152) of the first optical system (10) relative to the image-side principal plane (252) of the second optical system (20) with the shifting unit (12, 22) such that:
the image-side principal plane (152) of the first optical system (10) is different from the image-side principal plane (252) of the second optical system (20) and
an optical path length of the first interferometer arm (11) is equal to an optical path length of the second interferometer arm (21);
combining the first part of the input light field and the second part of the input light field into an output light field; and
measuring an interference pattern of the output light field with the detector (35).

12. The method according to the preceding claim, comprising at least one of:
(i) generating at least two intermediate interference patterns from the measured interference pattern at mutually different focal points by convolution of the measured interference pattern with a propagation kernel for a chosen propagation distance;
(ii) processing the at least two intermediate interference patterns with an algebraic method;
(iii) applying a filter function to the at least two intermediate interference patterns to create a result image.

13. The method according to the preceding claim, comprising
iteratively repeating the steps (i) to (iii), wherein the created result image of a previous iterative cycle is used as a measured interference pattern in the following iterative cycle.

14. The method according to any of the two preceding claims,
wherein the method comprises re-shaping the measured interference pattern by an electronic inverse convolution of the measured interference pattern with a re-shape function before generating the at least two intermediate interference patterns.

15. An interferometer assembly comprising
a telecentric interferometer according to any of claims 1 to 10 and
an illumination device;
wherein the illumination device is adapted for illuminating an object with illumination light such that different object points of the object:
coherently reflect or transmit part of the illumination light or
incoherently scatter or transmit the illumination light within the resolution.

## Patentansprüche

1. Telezentrisches Interferometer, das aufweist:
eine vorderseitige Optik, die eine Austrittspupille (42) aufweist;
einen ersten Interferometerarm (11), der Teil eines ersten optischen Systems (10) ist und auf der Bildseite der vorderseitigen Optik angeordnet ist; und
einen zweiten Interferometerarm (21), der Teil eines zweiten optischen Systems (20) ist und auf der Bildseite der vorderseitigen Optik angeordnet ist;
einen Detektor (35), der auf der Bildseite sowohl des ersten optischen Systems (10) als auch des zweiten optischen Systems (20) angeordnet ist; und
eine Verschiebeeinheit (12, 22), die zwischen der vorderseitigen Optik und dem Detektor (35) angeordnet ist;
wobei das erste optische System (10) und das zweite optische System eine identische objektseitige Brennweite (141, 241) und eine identische Gauß-Bildweite (151, 251) aufweisen;
wobei das erste optische System (10) und das zweite optische System (20) eine identisch positionierte objektseitige Hauptebene (142, 242) mit einer identischen objektseitigen optischen Achse (143, 243) aufweisen;
wobei die Austrittspupille (42) der vorderseitigen Optik um die objektseitige Brennweite (141, 241) von der objektseitigen Hauptebene (142, 242) beabstandet ist; und
wobei die Verschiebeeinheit (12, 22) eine bildseitige Hauptebene (152) des ersten optischen Systems (10) und/oder eine bildseitige Hauptebene (252) des zweiten optischen Systems (20) derart verschiebt, dass:
die bildseitige Hauptebene (152) des ersten optischen Systems (10) sich von der bildseitigen Hauptebene (252) des zweiten optischen Systems (20) unterscheidet und
eine optische Weglänge des ersten Interferometerarms (11) gleich einer optischen Weglänge des zweiten Interferometerarms (21) ist.

2. Telezentrisches Interferometer nach dem vorhergehenden Anspruch,
wobei die bildseitige Hauptebene (152) des ersten optischen Systems (10) und die bildseitige Hauptebene (252) des zweiten optischen Systems (20) parallel sind;
wobei sich eine bildseitige konjugierte Ebene (154) des ersten optischen Systems (10) von einer bildseitigen konjugierten Ebene (254) des zweiten optischen Systems (20) unterscheidet; und
wobei der Detektor (35) zwischen der bildseitigen konjugierten Ebene (154) des ersten optischen Systems (10) und der bildseitigen konjugierten Ebene (254) des zweiten optischen Systems (20) angeordnet ist.

3. Telezentrisches Interferometer nach einem der vorhergehenden Ansprüche, wobei eine bildseitige optische Achse (153) des ersten optischen Systems (10) mit einer bildseitigen optischen Achse (253) des zweiten optischen Systems (20) identisch ist.

4. Telezentrisches Interferometer nach einem der vorhergehenden Ansprüche,
wobei die Verschiebeeinheit (12, 22) aufweist:
eine erste schwache Linse (51), die im ersten Interferometerarm (11) angeordnet ist, und/oder eine zweite schwache Linse (52), die im zweiten Interferometerarm (12) angeordnet ist, und
eine starke Linse (53), die auf der Bildseite der ersten schwachen Linse (51) und/oder der zweiten schwachen Linse (52) angeordnet ist;
wobei die erste schwache Linse (51) und/oder die zweite schwache Linse (52) um eine objektseitige Brennweite (53f) der starken Linse (53) von einer objektseitigen Hauptebene (531) der starken Linse beabstandet ist.

5. Telezentrisches Interferometer nach dem vorhergehenden Anspruch,
wobei die starke Linse (53) sowohl Teil des ersten optischen Systems (10) als auch des zweiten optischen Systems (20) ist;
wobei die Verschiebeeinheit (12, 22) die erste schwache Linse (51) und die zweite schwache Linse (52) aufweist;
wobei eine Brennweite der ersten schwachen Linse (51) und eine Brennweite der zweiten schwachen Linse (52) in ihrer Größe gleich, jedoch in ihrem Vorzeichen entgegengesetzt sind, und/oder wobei entweder die erste schwache Linse (51) oder die zweite schwache Linse (52) eine konkave Linse oder ein konvexer Spiegel ist; und
wobei eine objektseitige Brennweite (53f) der starken Linse (53) in ihrer Größe kleiner ist als die Brennweite der ersten schwachen Linse (51) und die Brennweite der zweiten schwachen Linse (52).

6. Telezentrisches Interferometer nach einem der beiden vorhergehenden Ansprüche,
wobei das Interferometer in einer Michelson-Konfiguration ausgebildet ist;
wobei die Verschiebeeinheit (12, 22) die erste schwache Linse (51) und die zweite schwache Linse (52) aufweist;
wobei die erste schwache Linse (51) ein Konkavspiegel oder ein Planspiegel ist und die zweite schwache Linse (52) ein Konvexspiegel ist.

7. Telezentrisches Interferometer nach einem der vorhergehenden Ansprüche,
wobei die Verschiebeeinheit (12, 22) eine dielektrische Platte (361, 362) aufweist, die im ersten Interferometerarm (11) oder im zweiten Interferometerarm (12) angeordnet ist;
wobei ein Brechungsindex und/oder eine Dicke der dielektrischen Platte (361, 362) so gewählt ist, dass:
die optische Weglänge des ersten Interferometerarms (11) gleich der optischen Weglänge des zweiten Interferometerarms (12) ist und
sich eine geometrische Weglänge des ersten Interferometerarms (11) von einer geometrischen Weglänge des zweiten Interferometerarms (12) unterscheidet.

8. Telezentrisches Interferometer nach einem der vorhergehenden Ansprüche, ferner das aufweist:
eine Eintrittsoptik (31), die zwischen der vorderseitigen Optik einerseits und dem ersten Interferometerarm (11) und dem zweiten Interferometerarm (12) andererseits angeordnet ist, und
eine Ausgangsoptik (34), die zwischen dem ersten Interferometerarm (11) und dem zweiten Interferometerarm (12) einerseits und dem Detektor (35) andererseits angeordnet ist;
wobei die Ausgangsoptik (34) sowohl Teil des ersten optischen Systems (10) als auch des zweiten optischen Systems (20) ist,
wobei die Eintrittsoptik (31) sowohl Teil des ersten optischen Systems (10) als auch des zweiten optischen Systems (20) ist und
wobei die Eintrittsoptik (31) zum Einstellen der objektseitigen Brennweite (141) des ersten optischen Systems (10) und der objektseitigen Brennweite (241) des zweiten optischen Systems (20) eingerichtet ist.

9. Telezentrisches Interferometer nach einem der vorhergehenden Ansprüche,
wobei mindestens eines des ersten optischen Systems (10) oder des zweiten optischen Systems (20) eine Korrektureinheit (13, 23) aufweist, die zum Korrigieren einer durch die Verschiebeeinheit (12, 22) verursachten chromatischen Änderung der optischen Weglänge im ersten optischen System (10) und/oder im zweiten optischen System (20) eingerichtet ist;
wobei sich eine Brennweite der Korrektureinheit (13, 23) unendlich nähert; und mindestens eines von:
wobei die Korrektureinheit (13, 23) mindestens zwei dielektrische Elemente mit zueinander unterschiedlichen Brechungsindizes aufweist oder
wobei die Verschiebeeinheit (12, 22) eine dielektrische Platte (361, 362) aufweist, die ebenfalls Teil der Korrektureinheit (13, 23) ist, oder
wobei die Verschiebeeinheit (12, 22) mindestens ein optisches Element mit Brechkraft aufweist und mindestens eines der Gaußsche Reduktion aller optischen Elemente im ersten Interferometerarm (11) oder der Gaußschen Reduktion aller optischen Elemente im zweiten Interferometerarm (21), einschließlich der Korrektureinheit (12, 22), eine endliche Brennweite aufweist.

10. Telezentrisches Interferometer nach einem der vorhergehenden Ansprüche, das ferner aufweist:
eine Phasenverschiebeeinheit, die in oder stromabwärts von mindestens einem des ersten Interferometerarms (11) oder des zweiten Interferometerarms (21) angeordnet ist;
wobei die Phasenverschiebeeinheit mindestens eines aufweist von: einem beweglichen Spiegel, einem piezoelektrischen Kristall, einem Zirkularpolarisator, einem Linearpolarisator, einer Viertelwellenplatte oder einem polarisationsempfindlichen Detektor.

11. Verfahren zur Bestimmung einer Eigenschaft eines Eingangslichtfeldes mit einem telezentrischen Interferometer nach einem der vorhergehenden Ansprüche, das aufweist:
Propagieren des Eingangslichtfelds durch die Austrittspupille der vorderseitigen Optik;
Aufteilen des Eingangslichtfeldes in einen ersten Teil und einen zweiten Teil, wobei sich der erste Teil entlang des ersten optischen Systems (20) und der zweite Teil entlang des zweiten optischen Systems (20) ausbreitet;
Verschieben der bildseitigen Hauptebene (152) des ersten optischen Systems (10) relativ zur bildseitigen Hauptebene (252) des zweiten optischen Systems (20) mit der Verschiebeeinheit (12, 22) derart, dass:
die bildseitige Hauptebene (152) des ersten optischen Systems (10) sich von der bildseitigen Hauptebene (252) des zweiten optischen Systems (20) unterscheidet und
eine optische Weglänge des ersten Interferometerarms (11) gleich einer optischen Weglänge des zweiten Interferometerarms (21) ist;
Kombinieren des ersten Teils des Eingangslichtfeldes und des zweiten Teils des Eingangslichtfeldes zu einem Ausgangslichtfeld; und
Messen eines Interferenzmusters des Ausgangslichtfeldes mit dem Detektor (35).

12. Verfahren nach dem vorhergehenden Anspruch, das mindestens eines aufweist von:
(i) Erzeugen von mindestens zwei Zwischeninterferenzmustern aus dem gemessenen Interferenzmuster an zueinander unterschiedlichen Brennpunkten durch Faltung des gemessenen Interferenzmusters mit einem Ausbreitungskern für eine gewählte Ausbreitungsstrecke;
(ii) Verarbeiten der mindestens zwei Zwischeninterferenzmuster mit einem algebraischen Verfahren;
(iii) Anwenden einer Filterfunktion auf die mindestens zwei Zwischeninterferenzmuster, um ein Ergebnisbild zu erzeugen.

13. Verfahren nach dem vorhergehenden Anspruch, das aufweist
iteratives Wiederholen der Schritte (i) bis (iii), wobei das erzeugte Ergebnisbild eines vorherigen Iterationszyklus als gemessenes Interferenzmuster im folgenden Iterationszyklus verwendet wird.

14. Verfahren nach einem der beiden vorhergehenden Ansprüche,
wobei das Verfahren das Umformen des gemessenen Interferenzmusters durch eine elektronische inverse Faltung des gemessenen Interferenzmusters mit einer Umformfunktion vor dem Erzeugen der mindestens zwei Zwischeninterferenzmuster aufweist.

15. Interferometeranordnung, die aufweist
ein telezentrisches Interferometer nach einem der Ansprüche 1 bis 10 und eine Beleuchtungseinrichtung;
wobei die Beleuchtungseinrichtung eingerichtet ist, ein Objekt mit Beleuchtungslicht so zu beleuchten, dass verschiedene Objektpunkte des Objekts:
einen Teil des Beleuchtungslichts kohärent reflektieren oder durchlassen oder das Beleuchtungslicht innerhalb der Auflösung inkohärent streuen oder durchlassen.

## Revendications

1. Interféromètre télécentrique, comprenant :
une optique avant comprenant une pupille de sortie (42) ;
un premier bras d'interféromètre (11) faisant partie d'un premier système optique (10) et disposé côté image de l'optique avant ; et
un deuxième bras d'interféromètre (21) faisant partie d'un deuxième système optique (20) et disposé côté image de l'optique avant ;
un détecteur (35) disposé côté image du premier système optique (10) et du deuxième système optique (20) ; et
une unité de décalage (12, 22) disposée entre l'optique avant et le détecteur (35) ;
où le premier système optique (10) et le deuxième système optique ont la même distance focale côté objet (141, 241) et la même distance d'image de Gauss (151, 251) ;
où le premier système optique (10) et le deuxième système optique (20) présentent un plan principal côté objet (142, 242) positionné de manière identique, avec un axe optique côté objet (143, 243) identique ;
où la pupille de sortie (42) de l'optique avant est espacée du plan principal côté objet (142, 242) de la distance focale côté objet (141, 241) ; et
où l'unité de décalage (12, 22) décale un plan principal côté image (152) du premier système optique (10) et/ou un plan principal côté image (252) du deuxième système optique (20) de sorte que :
le plan principal côté image (152) du premier système optique (10) est différent du plan principal côté image (252) du deuxième système optique (20) et
la longueur de trajet optique du premier bras d'interféromètre (11) est égale à la longueur de trajet optique du deuxième bras d'interféromètre (21).

2. Interféromètre télécentrique selon la revendication précédente,
où le plan principal côté image (152) du premier système optique (10) et le plan principal côté image (252) du deuxième système optique (20) sont parallèles ;
où un plan conjugué côté image (154) du premier système optique (10) est différent d'un plan conjugué côté image (254) du deuxième système optique (20) ; et
où le détecteur (35) est disposé entre le plan conjugué côté image (154) du premier système optique (10) et le plan conjugué côté image (254) du deuxième système optique (20).

3. Interféromètre télécentrique selon l'une des revendications précédentes,
où un axe optique côté image (153) du premier système optique (10) est identique à un axe optique côté image (253) du deuxième système optique (20).

4. Interféromètre télécentrique selon l'une des revendications précédentes,
où l'unité de décalage (12, 22) comprend :
une première lentille faible (51) disposée dans le premier bras d'interféromètre (11) et/ou une deuxième lentille faible (52) disposée dans le deuxième bras d'interféromètre (12) et
une lentille forte (53) disposée côté image de la première lentille faible (51) et/ou de la deuxième lentille faible (52) ;
où la première lentille faible (51) et/ou la deuxième lentille faible (52) sont espacées d'un plan principal côté objet (531) de la lentille forte d'une distance focale côté objet (53f) de la lentille forte (53).

5. Interféromètre télécentrique selon la revendication précédente,
où la lentille forte (53) fait partie à la fois du premier système optique (10) et du deuxième système optique (20) ;
où l'unité de décalage (12, 22) comprend la première lentille faible (51) et la deuxième lentille faible (52) ;
où la distance focale de la première lentille faible (51) et la distance focale de la deuxième lentille faible (52) sont égales en valeur absolue mais de signes opposés et/ou où soit la première lentille faible (51), soit la deuxième lentille faible (52) est une lentille concave ou un miroir convexe ; et
où la distance focale côté objet (53f) de la lentille forte (53) est inférieure en valeur absolue à la distance focale de la première lentille faible (51) et à la distance focale de la deuxième lentille faible (52).

6. Interféromètre télécentrique selon l'une des deux revendications précédentes,
où l'interféromètre est prévu conformément à une configuration de type Michelson ;
où l'unité de décalage (12, 22) comprend la première lentille faible (51) et la deuxième lentille faible (52) ;
où la première lentille faible (51) est un miroir concave ou un miroir plan et la deuxième lentille faible (52) est un miroir convexe.

7. Interféromètre télécentrique selon l'une des revendications précédentes,
où l'unité de décalage (12, 22) comprend une plaque diélectrique (361, 362) disposée dans le premier bras d'interféromètre (11) ou dans le deuxième bras d'interféromètre (12) ;
où l'indice de réfraction et/ou l'épaisseur de la plaque diélectrique (361, 362) sont sélectionnées de sorte que :
la longueur de trajet optique du premier bras d'interféromètre (11) est égale à la longueur de trajet optique du deuxième bras d'interféromètre (12) et
la longueur de trajet géométrique du premier bras d'interféromètre (11) diffère de la longueur de trajet géométrique du deuxième bras d'interféromètre (12).

8. Interféromètre télécentrique selon l'une des revendications précédentes, comprenant en outre :
une optique d'entrée (31) disposée entre l'optique avant d'une part, et le premier bras d'interféromètre (11) et le deuxième bras d'interféromètre (12) d'autre part, et
une optique de sortie (34) disposée entre le premier bras d'interféromètre (11) et le deuxième bras d'interféromètre (12) d'une part, et le détecteur (35) d'autre part ;
où l'optique de sortie (34) fait partie à la fois du premier système optique (10) et du deuxième système optique (20),
où l'optique d'entrée (31) fait partie à la fois du premier système optique (10) et du deuxième système optique (20), et
où l'optique d'entrée (31) est adaptée pour régler la distance focale côté objet (141) du premier système optique (10) et la distance focale côté objet (241) du deuxième système optique (20).

9. Interféromètre télécentrique selon l'une des revendications précédentes,
où le premier système optique (10) et/ou le deuxième système optique (20) comprennent une unité de correction (13, 23) adaptée pour corriger une variation chromatique de longueur de chemin optique dans le premier système optique (10) et/ou le deuxième système optique (20), due à l'unité de décalage (12, 22) ;
où la distance focale de l'unité de correction (13, 23) tend vers l'infini ; et où :
l'unité de correction (13, 23) comprend au moins deux éléments diélectriques présentant des indices de réfraction mutuellement différents, et/ou
où l'unité de décalage (12, 22) comprend une plaque diélectrique (361, 362) qui fait également partie de l'unité de correction (13, 23), et/ou
où l'unité de décalage (12, 22) comprend au moins un élément optique présentant un pouvoir de réfraction et au moins la réduction gaussienne de tous les éléments optiques du premier bras d'interféromètre (11) et/ou la réduction gaussienne de tous les éléments optiques du deuxième bras d'interféromètre (21), comprenant l'unité de correction (12, 22), présentent une distance focale finie.

10. Interféromètre télécentrique selon l'une des revendications précédentes, comprenant en outre :
une unité de déphasage disposée dans le premier bras d'interféromètre (11) et/ou le deuxième bras d'interféromètre (21), ou en aval de ceux-ci ;
où l'unité de déphasage comprend : un miroir mobile et/ou un cristal piézoélectrique et/ou un polariseur circulaire et/ou un polariseur linéaire et/ou une lame quart d'onde et/ou un détecteur sensible à la polarisation.

11. Procédé pour déterminer une caractéristique d'un champ lumineux d'entrée au moyen d'un interféromètre télécentrique selon l'une des revendications précédentes, comprenant :
la propagation du champ lumineux d'entrée à travers la pupille de sortie de l'optique avant ;
la division du champ lumineux d'entrée en une première partie et une deuxième partie, la première partie se propageant le long du premier système optique (20) et la deuxième partie se propageant le long du deuxième système optique (20) ;
le décalage du plan principal côté image (152) du premier système optique (10) par rapport au plan principal côté image (252) du deuxième système optique (20) au moyen de l'unité de décalage (12, 22), de sorte que :
le plan principal côté image (152) du premier système optique (10) est différent du plan principal côté image (252) du deuxième système optique (20), et
la longueur de trajet optique du premier bras d'interféromètre (11) est égale à la longueur de trajet optique du deuxième bras d'interféromètre (21) ;
la combinaison de la première partie du champ lumineux d'entrée et la deuxième partie du champ lumineux d'entrée pour former un champ lumineux de sortie ; et
la mesure d'un motif d'interférence du champ lumineux de sortie au moyen du détecteur (35).

12. Procédé selon la revendication précédente, comprenant :
(i) la génération d'au moins deux motifs d'interférence intermédiaires à partir du motif d'interférence mesuré sur des points focaux mutuellement différents, par convolution du motif d'interférence mesuré avec un noyau de propagation pour une distance de propagation choisie ; et/ou
(ii) le traitement des au moins deux motifs d'interférence intermédiaires au moyen d'un procédé algébrique ; et/ou
(iii) l'application d'une fonction de filtre aux au moins deux motifs d'interférence intermédiaires afin de créer une image résultante.

13. Procédé selon la revendication précédente, comprenant
la répétition itérative des étapes (i) à (iii), l'image de résultat créée lors d'un cycle itératif précédent étant utilisée comme motif d'interférence mesuré dans le cycle itératif suivant.

14. Procédé selon l'une des deux revendications précédentes,
ledit procédé comprenant la reformation du motif d'interférence mesuré par une convolution inverse électronique du motif d'interférence mesuré avec une fonction de reformation, avant la génération des au moins deux motifs d'interférence intermédiaires.

15. Ensemble d'interféromètre, comprenant
un interféromètre télécentrique selon l'une des revendications 1 à 10 et un dispositif d'éclairage ;
où le dispositif d'éclairage est adapté pour éclairer un objet avec une lumière d'éclairage de sorte que différents points de l'objet :
réfléchissent ou transmettent de manière cohérente une partie de la lumière d'éclairage, ou
diffusent ou transmettent de manière incohérente la lumière d'éclairage à l'intérieur de la résolution.
